# EUROPEAN PATENT APPLICATION

(11) **EP 2 919 121 A1**
(43) Date of publication of application: **16.09.2015**
(21) Application number: 12888057.2
(22) Date of filing: 09.11.2012
(51) Int. Cl.: G06F 13/00, H04N 1/00, H04N 7/15

(54) **VIDEO INFORMATION TERMINAL AND VIDEO DISPLAY SYSTEM**

(71) Applicant: Hitachi Maxell, Ltd., Ibaraki-shi, Osaka 567-8567 (JP)
(72) Inventor: MARUYAMA Atsushi, Ibaraki-shi, Osaka 567-8567 (JP); IWAHARA Kenichi, Ibaraki-shi, Osaka 567-8567 (JP); ONODERA Shinji, Ibaraki-shi, Osaka 567-8567 (JP); TAKATSUJI Masaaki, Ibaraki-shi, Osaka 567-8567 (JP); SOMEYA Yusaku, Ibaraki-shi, Osaka 567-8567 (JP); KAWAGUCHI Yuta, Tokyo 100-8280 (JP); MURAI Tatsuo, Tokyo 100-8280 (JP); ISHIBASHI Atsushi, Tokyo 100-8280 (JP); TOKUNAGA Tatsuya, Tokyo 100-8280 (JP); JANG Jihoon, Ibaraki-shi, Osaka 567-8567 (JP)
(74) Representative: Moore, Graeme Patrick
(86) International application number: PCT/JP2012/079130
(87) International publication number: WO 2014/073092

(57) **Abstract**

A video display system which enhances the smoothness of meeting and includes a video information terminal device typified by a liquid crystal projector, a video display unit typified by a whiteboard, a server which stores information, a user terminal device typified by a mobile terminal held by a member of meeting is provided. A host of a meeting transmits information regarding time, members, and contents of the meeting to the server. A created reservation list and a created participant list of a meeting room are displayed on the video display unit by the video information terminal device. The display is updated depending on an attendance/nonattendance answer from a member. A diagram or letters written on the video display unit during the meeting are captured by the video information terminal device, inverted in brightness, stored in a memory, and displayed as a video image. At the end of the meeting, video data stored in the memory is stored as a file. When the meeting is resumed, the stored file is reproduced, developed in the memory, and displayed as a video image.

## Description

### Technical Field

The present invention relates to a video information terminal device and a video display system and, more particularly, to a video information terminal device and a video display system which enhance the smoothness of meeting.

### Background Art

A video projection device typified by a liquid crystal projector and a video display device using a screen which displays a projected video image thereon are known. In particular, since the video projection device and the video display device are expected to obtain appeal effects in a demonstration hall or a meeting room, the video projection device and the video display device are popularly used.

PTL 1 discloses an image projection control device in which a relationship between a projected manuscript image and a handwritten image is clear. In PTl 2 discloses a projector in which an additionally-written image which is additionally written to be superposed on a projected image is synthesized with the projected image so as to project the synthesized image.

### Citation List

### Patent Literature

PTL 1: Japanese Patent Application Laid-Open No. 2012-090135
PTL 2: Japanese Patent Application Laid-Open No. 2008-122749

### Summary of Invention

### Technical Problem

However, the development of a new system which actively enhances, for example, the smoothness of meeting on the basis of the Patent Literatures remains to be solved.

For example, the development of new system is expected to be developed by employing a rapidly popularized server, an information device typified by a PC, a network technique.

In consideration of the above circumstances, it is an object of the present invention to provide a video information terminal device and a video display system which enhance the smoothness of meeting.

### Solution to Problems

In order to solve the above problem, the present invention provides a video information terminal device and a video display system which are described in claims.

For example, the present invention provides a video information terminal device for meeting room which processes video information to display the video information on an external video display unit, including a storage unit which stores the video information therein, a video output unit which reads the video information stored in the storage unit to display the video information on the video display unit, a communication unit which communicates with an external user terminal device held by a user of the video information terminal device, and a control unit which controls the operation of the video information terminal device, wherein the control unit controls the operation of the video information terminal device such that, on the basis of information regarding reservation for a meeting room obtained from the user through the communication unit, a reservation list including information regarding reservation time, a reservation person, and a content of the meeting room is created, stored in the storage unit, and displayed on the video display unit through the video output unit.

The present invention provides a video information terminal device for meeting room which processes video information to display the video information on an external video display unit, including a storage unit which stores video information therein, a video output unit which reads the video information stored in the storage unit to display the video information on the video display unit, a capture unit which captures letters or diagrams hand-written on the video display unit by a user of the video information terminal device and converts the letters or the diagrams into digital data, and a control unit which controls the operation of the video information terminal device, wherein the control unit controls the operation of the video information terminal device such that video data obtained by the capturing and the conversion into the digital data is inverted in brightness and stored in the storage unit, and the stored video data is read and displayed on the video display unit through the video output unit.

The present invention also provides a video information terminal device for meeting room which processes video information to display the video information on an external video display unit, including a storage unit which stores video information therein, a video output unit which reads the video information stored in the storage unit to display the video information on the video display unit, a capture unit which captures, in addition to a video image written by a user of the video information terminal device on the video display unit, video information captured and supplied by an external capture device and converts the video information into digital data, and a control unit which controls the operation of the video information terminal device, wherein the control unit controls the operation of the video information terminal device such that a video image on the video display unit is cut out of the digital data obtained by the conversion by the capture unit and converted into a rectangular video image, the video data obtained by the conversion is inverted in brightness and stored in the storage unit, and the stored video data is read and displayed on the video display unit through the video output unit.

A video display system according to the present invention includes the video information terminal device, a video display unit which displays a video image supplied by the video information terminal device, a user terminal device which exchanges information with the video information terminal device through the communication unit of the video information terminal device, and a storage unit typified by a server which exchanges information with the video information terminal device through the communication unit of the video information terminal device and stores the information obtained by the communication.

In the video display system, video data converted into digital data stored in the storage unit included in the video information terminal device and video data obtained by capturing video data from the video display unit and converting the video data into digital data are synthesized with each other by the video information terminal device, stored in the storage unit included in the video information terminal device, and displayed on the video display unit.

In the video display system, the video data synthesized by the video information terminal device is stored as a video file in the storage unit typified by a server, and the video information terminal device reads the video file from the storage unit typified by a server to display the video file on the video display unit. Advantageous Effects of Invention

According to the present invention, a video information terminal device and a video display system which enhance the smoothness of meeting can be provided to advantageously contribute to improving the functions of the device and the system.

### Brief Description of Drawings

Figure 1 is a first block diagram of a video display system according to an embodiment.
Figure 2 is a second block diagram of a video display system according to an embodiment.
Figure 3 is a third block diagram of a video display system according to a first embodiment.
Figure 4 is a fourth block diagram of the video display system according to the first embodiment.
Figure 5 is a fifth block diagram of the video display system according to the first embodiment.
Figure 6 is a sixth block diagram of the video display system according to the first embodiment.
Figure 7 is a diagram showing an information management tree of the video display system according to the first embodiment.
Figure 8 is a first block diagram of a video display system according to a second embodiment.
Figure 9 is a diagram showing a reservation list and a participant list of a meeting in the second embodiment.
Figure 10 is a second block diagram of the video display system according to the second embodiment.
Figure 11A is a diagram showing an example of a video image displayed on a video display unit in a third embodiment.
Figure 11B is a flow chart showing a flow of operations in the third embodiment.
Figure 11C is a flow chart showing a flow of operations in the third embodiment.
Figure 12 is a first block diagram of a video display system in a fourth embodiment.
Figure 13 is a second block diagram of the video display system according to the fourth embodiment.
Figure 14 is a third block diagram of the video display system according to the fourth embodiment.
Figure 15 is a fourth block diagram of the video display system according to the fourth embodiment.
Figure 16 is a fifth block diagram of the video display system according to the fourth embodiment.
Figure 17 is a first block diagram of a video display system according to a fifth embodiment.
Figure 18 is a second block diagram of the video display system according to the fifth embodiment.
Figure 19 is a flow chart showing a flow of operations in the fifth embodiment.
Figure 20 is a first block diagram of a video display system in a sixth embodiment.
Figure 21 is a second block diagram of the video display system according to the sixth embodiment.
Figure 22 is a first block diagram of a video display system according to a seventh embodiment.
Figure 23 is a second block diagram of the video display system according to the seventh embodiment.
Figure 24 is a block diagram of a video display system according to an eighth embodiment.
Figure 25 is a block diagram of a video information terminal device in a ninth embodiment.
Figure 26 is a diagram showing a video image displayed by a video information terminal device according to a tenth embodiment.

### Description of Embodiments

Embodiments of the present invention will be described below with reference to the accompanying drawings. An outline of each video display system according to each of the embodiments will be described first.

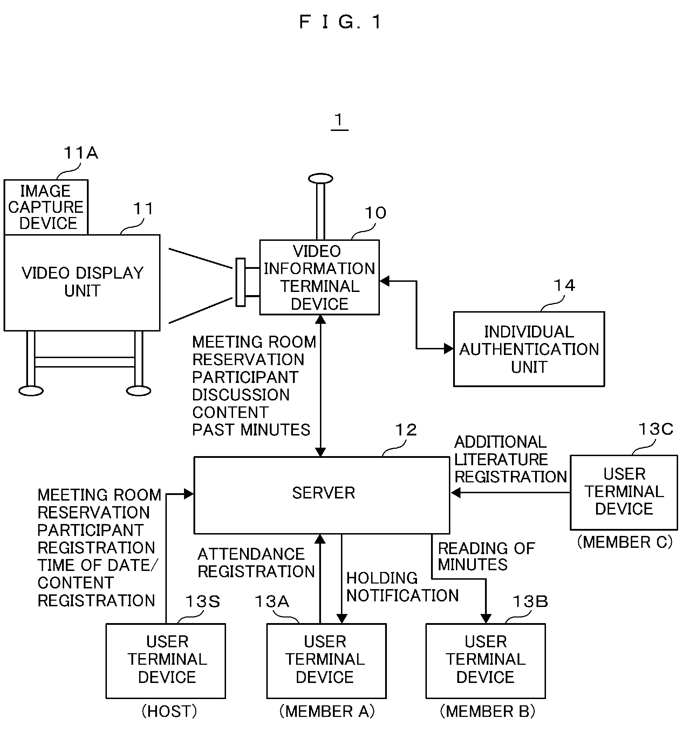

Figure 1 is a first block diagram of a video display system 1 according to an embodiment.

The video display system 1 has a video information terminal device 10 having a video display function and typified by a liquid crystal projector. The video information terminal device 10 is installed in, for example, a meeting room. The video display system 1 has a video display unit 11 typified by a whiteboard or a blackboard. On the video display unit 11, a user can handwrite letters or a diagram with a writing tool typified by a marker pen. The video display unit 11 is installed in, for example, a meeting room, and displays a video image supplied from the video information terminal device 10. When a liquid crystal projector is used as the video information terminal device 10, a video image optically projected is displayed on the video display unit 11.

The video display system 1 further includes an application which manages reservation information for meeting room, manages a schedule of each user, and notifies the corresponding user of information with an electronic mail.

The video display system 1 has a server 12 used to share information by devices in the system. The server 12 is connected to the video information terminal device 10 through, for example, a network, and connected to a user terminal device 13 typified by a PC or a mobile terminal held by each user through a network. Although, as the user terminal device 13, four terminal devices 13A to 13C and 13S are shown here, the number of terminal devices is not limited as a matter of course. In addition, any one of the user terminal devices 13 may be fixedly installed in the meeting room in which the video information terminal device 10 is installed.

The application may be stored in the server 12 or may be stored in the video information terminal device 10. As will be described later, although a small-scale embodiment configured without using a network may be conceived, in this case, the application is stored in the video information terminal device 10.

The reservation information for meeting room included in the application has information of, for example, a holding place of a meeting, reservation time thereof, a reservation person, a host, an agenda, participants, and a literature to be used.

The video information terminal device 10, unlike a conventional liquid crystal projector, has a large number of functions regarding the reservation information for meeting room. For example, the video information terminal device 10 has a function of displaying a list of meetings to be held on the day in the meeting room in which the terminal is installed as a video image, a function of managing participants, late comers, and absentees on the day of the meeting to take care of the later comers by using electronic mails, and a function of displaying a remaining time during the meeting on the basis of set reservation ending time or urging the participants to finish the meeting with voice, and the like.

The video information terminal device 10 captures a minute including a diagram or letters written on the video display unit 11 by a participant by means of a marker pen or the like. Thereafter, the captured minute is displayed on the video display unit 11. A state in which a participant additionally writes a new diagram or new letters with a marker pen on a meeting literature typified by a captured minute and displayed on the video display unit 11 is captured to create a minute or a meeting literature obtained by synthesizing the meeting literature with the letters or the diagram. In the following description, an image obtained on a stage on which a participant writes a diagram or letters on the video display unit 11 may be called an analog minute, and a minute generated by capturing the analog minute may be called a digital minute. For the capture, the video display unit 11 may have a capture device 11A on the assumption that the capture device 11A typified by a capture function of a whiteboard conventionally included in the video display unit 11 is applied.

When the video information terminal device 10 is a projection-type device such as a liquid crystal projector, a digital minute is projected on an analog minute created with a marker pen to make it possible to visually synthesize both the minutes with each other.

The video information terminal device 10 has a function of designating one point or a certain area on a display screen on the video display unit 11 depending on a designation of a user, and a function of operating information to be displayed on the designated portion. In the following description, the functions may be called interactive functions. In this manner, the user can edit the digital minute. The video display unit 11 may have a user input unit to accept the designation of the user on the assumption that a mouse or a touch panel is used as the user input unit.

The video information terminal device 10 has a function of encoding the digital minutes into a video file to store the video file in the server 12 and a function of, when a meeting which is temporarily interrupted is resumed, reading a storage file of the minute from the server 12, decoding the storage file in a control unit 101, and developing the decoded file in a VRAM included in a storage unit 107 to display the developed file on the video display unit 11 as a digital minute. As a matter of course, the file may be stored in a memory built in the video information terminal device 10 or an external storage medium externally attached to the video information terminal device 10. In the following description, a file obtained by encoding a digital minute into a video file and storing the video file may be called a minute file.

The video information terminal device 10 has a function of reading a "literature to be used in meeting" included in the reservation information for meeting room and displaying the "literature to be used in meeting" on the video display unit 11.

The video information terminal device 10 has a function of receiving literature files from the individual terminal devices 13A to 13C and 13S typified by PCs or mobile terminal devices held by users and adding the literature files to the "literature to be used in meeting" included in the reservation information for meeting room.

The video information terminal device 10 has a function for meeting typified by a function of displaying a schedule or a Post-it function (will be described later).

In Figure 1, an individual authentication unit 14 is shown. However, the individual authentication unit 14 may be preferably included in a user-friendly constituent element such as the video information terminal device 10 or the video display unit 11. For example, a user interface unit of the individual authentication unit 14 may be included in the video display unit 11. The purposes of the individual authentication unit 14 will be described later.

As is written with letters in Figure 1, the user terminal device 13S held by a host of meeting reserves a meeting room for the server 12 to register participants, time of day, and contents. As a matter of course, the contents may include a meeting literature. An electronic mail of holding notification is sent from the server 12, for example, the host to the user terminal device 13A held by a member A who is an interested person of the meeting. In response to the electronic mail, the member A performs attendance/non-attendance registration to the server 12 through the user terminal device 13A. When the member A will attend the meeting, she/he is managed as a participant in the meeting. When a member B desires to browse a previous meeting minute, the member B can access the server 12 through the user terminal device 13B held by the member B to browse the previous meeting minute. When a member C desires to add a literature used in the meeting, and the member C can additionally register the literature by accessing the server 12 through the user terminal device 13C held by the member C. As a matter of course, in this case, the member B or the member C may be the same person as the host.

Furthermore, although the video display system 1 has a large number of functions to enhance the smoothness of meeting, the functions will be described below in detail together with the items described above.

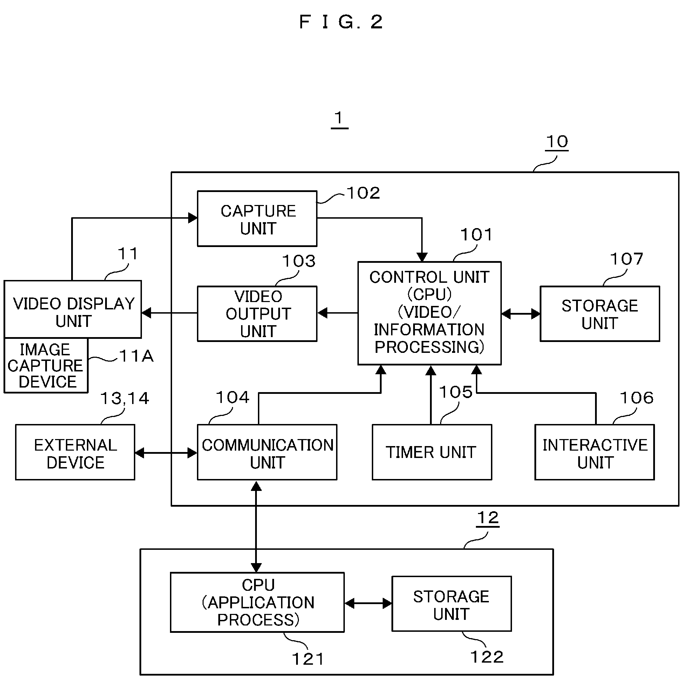

Figure 2 is a second block diagram of the video display system 1 according to an embodiment. Although Figure 2 shows a system similar to that of the block diagram shown in Figure 1, the insides of the video information terminal device 10 and the server 12 are especially shown in detail. The user terminal device 13 and the individual authentication unit 14 described above are collectively shown as external devices.

The video information terminal device 10 has a CPU (Central Processing Unit) 101 having, as a main function, a process based on an application for a video image and information. The CPU 101 controls an entire operation of the video information terminal device 10, and performs a decoding process when, for example, a stored literature file is displayed. The CPU 101 has an OSD (On Screen Display) function to add a navigation bar (will be described later) to a video image displayed on the video display unit 11. The CPU 101 may be called a control unit hereinafter.

A capture unit 102 has a function of capturing, for example, letters or a diagram hand-written on the video display unit 11. As described above, when the video display unit 11 has the capture device 11A typified by a capture function of a whiteboard conventionally included in the video display unit 11, a post-process is performed to supply the letters and the diagram to the CPU 101.

A video output unit 103 supplies video information obtained by decoding the literature file by the CPU 101 to display the literature file to the video display unit 11. When the video information terminal device 10 is a liquid crystal projector, the transmittance of the liquid crystal panel is changed depending on video images to generate projection light, and the projection light is supplied to the video display unit 11.

A communication unit 104 has a network connecting function or a connecting function typified by a USB (Universal Serial Bus) connecting function with an external device. The information related to holding of meeting and meeting literatures which has been described in Figure 1 is transmitted and received through, for example, electronic mails.

A timer unit 105 has a function of acquiring or generating current time information typified by an SNTP (Simple Network Time Protocol) or RTC (Real Time Clock) to supply the current time information to the CPU 101. Alternatively, time information included in an OS (Operating System) of the video information terminal device 10 may be acquired. The time information is used when warning of overtime of a meeting (will be described later) is given.

An interactive unit 106 has a function of generating positional information regarding a point or a certain area on the video display unit 11 designated by a user as described above to supply the positional information to the CPU 101.

A memory 107 has a RAM (Random Access Memory) and a ROM (Read Only Memory). The RAM includes a VRAM to store video information processed by the CPU 101 or displayed on the video display unit 11 therein and an OSDRAM to store video information such as the video information of the navigation bar superposed on the video information. The ROM stores an application used in, for example, the video information terminal device 10.

The server 12 has a function of controlling the entire operation of the server 12, processing information regarding reservation for meeting room supplied from, for example, the communication unit 104 of the video information terminal device 10, and storing the processed information in a storage unit 122. The server 12 also has a function of creating a meeting minute on the basis of the video information displayed on the video display unit 11 and supplied from the communication unit 104 of the video information terminal device 10 and storing the meeting minute in the storage unit 122. The server 12 also has a function of transmitting information regarding the holding of meeting or the created minute to the user terminal device 13 through the communication unit 104 of the video information terminal device 10.

The storage unit 122 has a RAM and a ROM like the storage unit 107 of the above video information terminal device 10, and stores, for example, the minute or an application used in the server 12 therein.

In Figure 2, although the server 12 is connected to one video information terminal device 10, the server 12 may be connected to the plurality of video information terminal devices 10 as a matter of course. In this case, a CPU 121 controls the large-scale video display system 1 having the plurality of video information terminal devices 10 as a whole.

### First Embodiment

Specifications regarding to reservation for meeting room will be described below, and a system configuration will be described in more detail.

As the specifications, first, a host of meeting operates the user terminal device 13S to register reservation information for meeting room in the server 12 through the video information terminal device 10. This operation can be achieved such that the video information terminal device 10, the server 12, and the user terminal device 13S have applications having the corresponding functions, respectively.

Second, in the registration of the reservation information for meeting room, the server 12 updates a schedule list of the host and registers time of the day of a meeting in the storage unit 122. This operation can be achieved such that the server 12 has an application having the corresponding function. When a constituent element having an application for achieving a function is apparent, the constituent element will not be described.

Third, each member of the meeting including the host accesses the server 12 through her/his own user terminal device 13 to refer to the reservation information for meeting room registered in the server 12 and the scheduling list of each of the members. In a configuration (as will be described later) having no server 12, each of the members operates her/his own user terminal device 13 to access the video information terminal device 10 in each meeting room to refer to the reservation information for meeting room registered in the video information terminal device 10. Hereinafter, when each of the members refers to the reservation information for meeting room, when it is apparent that the member accesses the server 12 or the video information terminal device 10, the access to the server 12 or the video information terminal device 10 is not described.

Fourth, each of the members including the host operates her/his own user terminal device 13 to attach a meeting literature to the reservation information for meeting room registered in the server 12 and refers to a meeting literature attached by another member. As needed, the security level may be increased such that only members who participate in the meeting can refer to the meeting literature.

Fifth, the server 12 transmits a notification of holding a meeting through, for example, an electronic mail, to members registered as interested persons of the meeting by the host.

Sixth, each of the members who receive the notification of holding operates her/his own user terminal device 13 to register attendance or non-attendance on the meeting in the server 12 by using a URL (Uniform Source Locator) written on the notification.

Seventh, with respect to each of the members registered as participants in the meeting, the server 12 registers to participate in the meeting in her/his own schedule list together with, for example, time of day.

Eighth, the video information terminal device 10 refers to reservation information for each meeting room registered in the server 12 to display the reservation information on the video display unit 11 depending on, for example, a designation of a user.

All the first to eighth specifications described above need not be always satisfied.

A system block diagram regarding to meeting room reservation corresponding to the specifications will be described below.

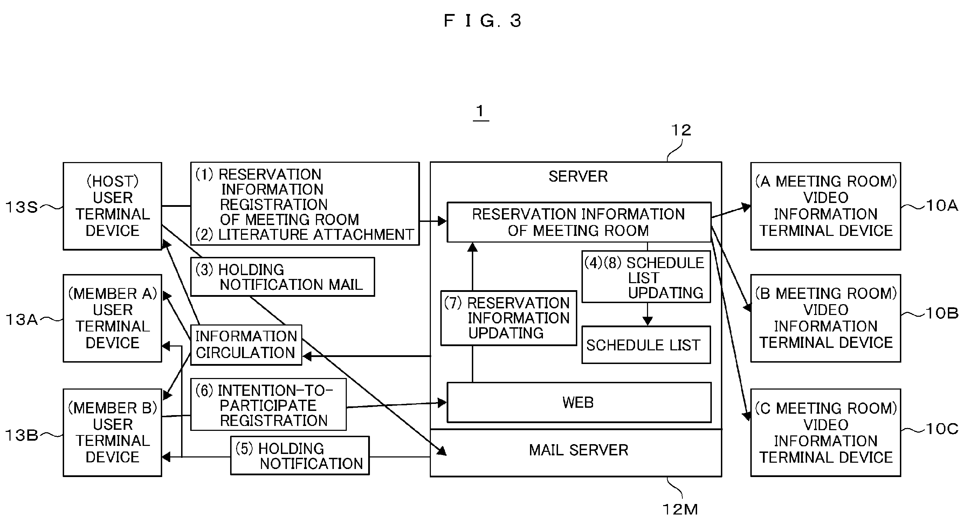

Figure 3 is a third block diagram of the video display system 1 according to the first embodiment, and also shows a flow of functions especially when the plurality of video information terminal devices 10, the server 12, and the plurality of user information terminal devices 13 are arranged. The server 12 has a mail server 12M interlocked therewith, and manages reservation for meeting room and meeting schedules. The flow is performed in the order of numbers in parentheses. A video information terminal device 10A, a video information terminal device 10B, and a video information terminal device 10C are installed in different meeting rooms, i.e., a meeting room A, a meeting room B, and a meeting room C, respectively. The user terminal device 13S held by a host of a meeting, and the user terminal devices 13A and 13B are terminal devices held by a member A and a member B of the meeting, respectively. It is assumed that the member A will not attend the meeting nor did not answer and the member B will attend the meeting.

The host of the meeting operates her/his own user terminal device 13S to register, for example, reservation information for meeting including time in the server 12, and, if a meeting literature is prepared, registers the literature in the server 12 as an attached literature. The host of the meeting operates the user terminal device 13S to transmit a notification of holding the meeting to the mail server 12M as a mail for each of the members. The server 12 updates the schedule list of the host to register information including start time and ending time of the meeting. Depending on the mail, the mail server 12M transmits a notification of holding the meeting to each of the members. Of the members who receive the notification of holding, the member B who will attend the meeting operates her/his own user terminal device 13B to notify a WEB unit of the server 12 to register the member B as a participant. The server 12 updates its own reservation information depending on a response from the member B. Furthermore, the schedule list of the member B is updated to register information including the start time and the ending time of the meeting.

The host and each of the members can refer to the reservation information for meeting room registered in the server 12, the schedule list of each of the members, or the meeting literature by their own user terminal devices 13 and can refer to the reservation information, the schedule list, or the meeting literature by the video information terminal device 10 in a reserved meeting room.

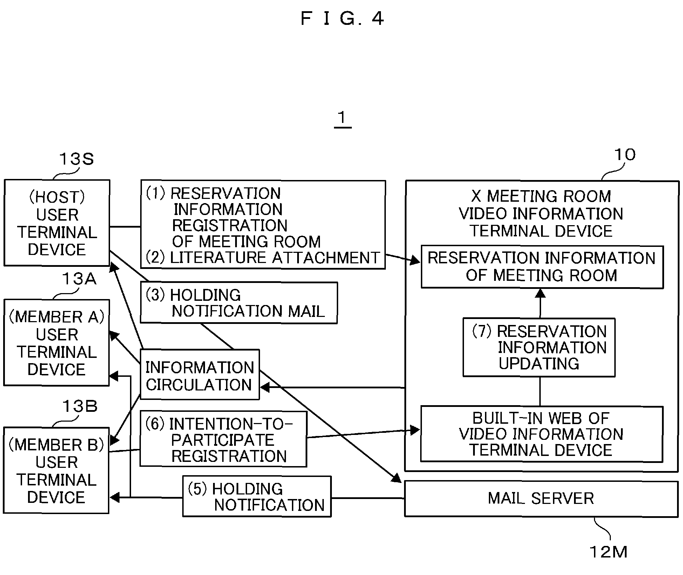

Figure 4 is a fourth block diagram of the video display system 1 according to the first embodiment, and, unlike Figure 3, shows a case in which only the mail server 12M is used as a server and the video information terminal device 10 installed in a meeting room manages reservation information for meeting room.

The host of the meeting operates her/his own user terminal device 13S to register reservation information for meeting including, for example, time in the video information terminal device 10. The host of the meeting operates the user terminal device 13S to transmit a notification of holding the meeting for the members to the mail server 12M as a mail. In response to the mail, the mail server 12M transmits the notification of holding the meeting to the members. Of the members who receive the notification of holding the meeting, the member B who will participate in the meeting operates her/his own user terminal device 13B to notify the WEB unit of the video information terminal device 10 to register the member B as a participant. The video information terminal device 10 updates the reservation information held by the video information terminal device 10 depending on a response from the member B.

The host and each of the members can refer to the reservation information for meeting room registered in the video information terminal device 10 or the meeting literature by their own user terminal devices 13 and can refer to the reservation information or the meeting literature by the video information terminal device 10 in a reserved meeting room. In Figure 4, unlike in Figure 3, when the host reserves a meeting room, the host designates a specific meeting room and inquires.

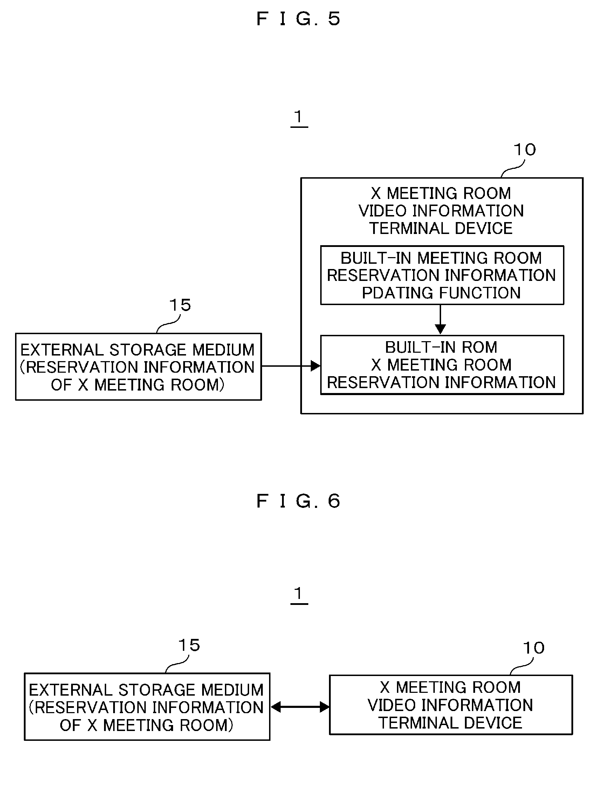

Figure 5 is a fifth block diagram of the video display system 1 according to the first embodiment, and shows a closed system which uses no network. In this case, the video information terminal device 10 uses a meeting room reservation information updating function included therein or uses meeting room reservation information updating stored in an external storage medium externally attached thereto to update the reservation information of the specific meeting room registered in the memory included in the video information terminal device 10.

In this case, information transmitted by the host or each of the members is supplied through an interface typified by a keyboard arranged on the video information terminal device 10 or by being stored in a user external storage medium.

Figure 6 is a sixth block diagram of the video display system 1 according to the first embodiment. In Figure 6, unlike in Figure 5, the video information terminal device 10 uses only reservation information for meeting room stored in the external storage medium 15 and updates reservation information for a specific meeting room registered in the memory included in the video information terminal device 10. The system in Figure 6 disadvantageously has poor convenience, but the system is simple.

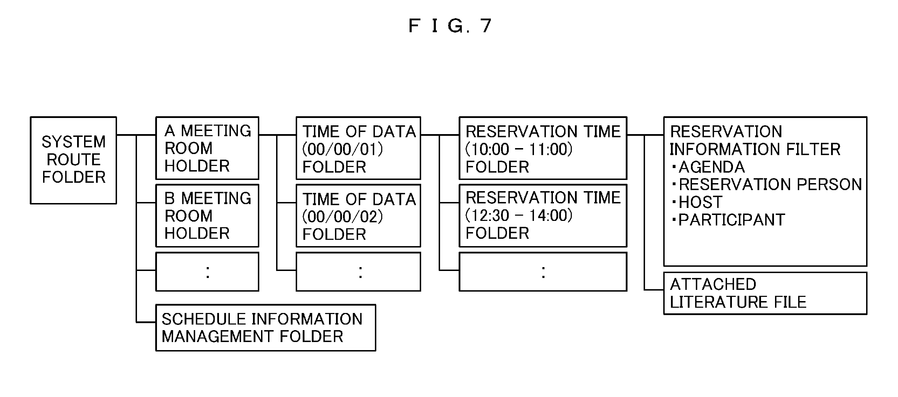

Figure 7 is a diagram showing an information management tree of the video display system 1 according to the first embodiment. Figure 7 shows the reservation information for meeting room together with the contents of the reservation information.

A meeting room folder formed in response to each meeting room and a schedule information management folder which manages schedules of the meeting rooms in parallel with each other belong to a system route folder which generalizes the entire system. Date folders formed in units of dates belong the meeting room folder. A reservation time folder formed depending on designated meeting time belongs to the date folder. In the reservation time folder, for example, a reservation information file including an agenda, a reservation person, a host, and participants and an attached literature file registered by a member are stored.

Each of the members including the host can search for the corresponding folder and refer to the reservation information file and the attached literature file. When the host reserves a meeting room, the schedule information management folder functions to make it possible to search for a meeting room which is not reserved in a desired time. For this reason, the load on the host in reservation can be reduced.

As described above, according to the video display system 1 or the video information terminal device 10 shown in each of Figure 1 to Figure 7, reservation for meeting room, check of holding time, advance recognition of participants, and advance examination of literatures can be easily performed to make it possible to advantageously enhance the smoothness of meeting.

### Second Embodiment

Specifications regarding a method of selecting a specific meeting from an image displayed on the video display unit 11 by each of members including a host and a method of managing a person who enters a meeting room will be described below, and the system configuration will be described in more detail.

As the specifications, first, the video information terminal device 10 creates the reservation list of meeting rooms on the basis of the reservation information for meeting room and current time and displays the reservation list on the video display unit 11. In this case, as a method of acquiring current time by the video information terminal device 10, a method of acquiring current time from an external SNTP server through the communication unit 104, a method of acquiring current time on the basis of management time of an OS included in the video information terminal device 10, and a method of acquiring current time from an RTC included in the timer unit 105 of the video information terminal device 10 are given. The SNTP server may also be achieved by the server 12 in Figure 2. When the management time of the OS is used, a user of the video information terminal device 10 sets time first, and, thereafter, a power must be always supplied to the constituent elements including the CPU 101. When the RTC is used, the user of the video information terminal device 10 sets time, and a power must be always supplied from a small-scale buttery to the timer unit 105.

Second, the video information terminal device 10 determines whether a host enters a meeting room by using the individual authentication unit 14 or requesting requests a member to input a log-in ID (password). Information obtained by the determination may be called host entrance information hereinafter.

Third, the video information terminal device 10 determines and selects a meeting to be started from now on the basis of the reservation information for meeting room, the current time information, and the host entrance information. Note that when a meeting having a low security level is held, the video information terminal device 10 may display the reservation list of the meeting rooms, each member may select the meeting from the reservation list without the host entrance information.

Fourth, the video information terminal device 10 checks a participation state of each of the members by specifying an entered person with the individual authentication unit 14. Information obtained by the check may be called entered person information. Alternatively, the video information terminal device 10 creates a participant list showing members each of whom answered that she/he participated in the meeting on the basis of the reservation information for meeting room, displays the participant list as a video image, causes a member who entered the room to select a display representing her/him herself/himself from the participant list to compile the participation states.

In the individual authentication unit 14, biological authentication such as fingerprint authentication may be used, or card authentication may be used. The individual authentication unit 14 may be interlocked with an entrance security function installed in each meeting room. At least the user interface unit of the individual authentication unit 14 is preferably arranged on the video display unit 11 which is easily seen by an entered member.

Fifth, the server 12 transmits, on the basis of the entered person information, a holding forenotice mail to the user terminal device 13 of a member who answered that she/he participated in the meeting but has not entered the room immediately before (for example, 10 minutes before) start time of discussion. Alternatively, for example, the host of the meeting may select a mail transmitting button included in the participant list displayed on the video display unit 11 to transmit the mail.

Sixth, as in the sixth specification of the first embodiment, each of the participants in the meeting uses a URL written on the holding notification mail registers to participate in the meeting, not to participate in the meeting, or to be late for the meeting in the server 12 again as needed. The contents registered again are reflected in the reservation information for the meeting room in which the meeting is being held, and the server 12 updates the participant list displayed on the video display unit 11.

Seventh, the reservation list and the participant list displayed on the video display unit 11 are operated by a member by means of the interactive unit 106 of the video information terminal device 10 to select a required display portion.

Eighth, when the start time of the meeting has come, or when a start menu item displayed on the reservation list or the participant list is selected, the step of displaying information typified by, for example, the previous minute and used in the meeting is started. This step will be described later.

Ninth, the video information terminal device 10 or the server 12 has a function of turning on a power supply for the video information terminal device 10 on the basis of the reservation information for meeting room before the meeting is started.

Tenth, a member uses the reservation list display of the meeting rooms to refer to information regarding meetings in the past and meetings in the future.

Eleventh, the video information terminal device 10 has a function of, when meeting rooms must be changed on the day of a meeting or when a time for the meeting exceeds a reservation time, looking for a vacant meeting room to reserve the vacant meeting room. At this time, the video information terminal device 10 transmits a mail to the user terminal device 13 of a member who answered that she/he participated in the meeting but has not entered the room to notify the member of the change of the meeting rooms.

All the first to eleventh specifications described above need not be always satisfied.

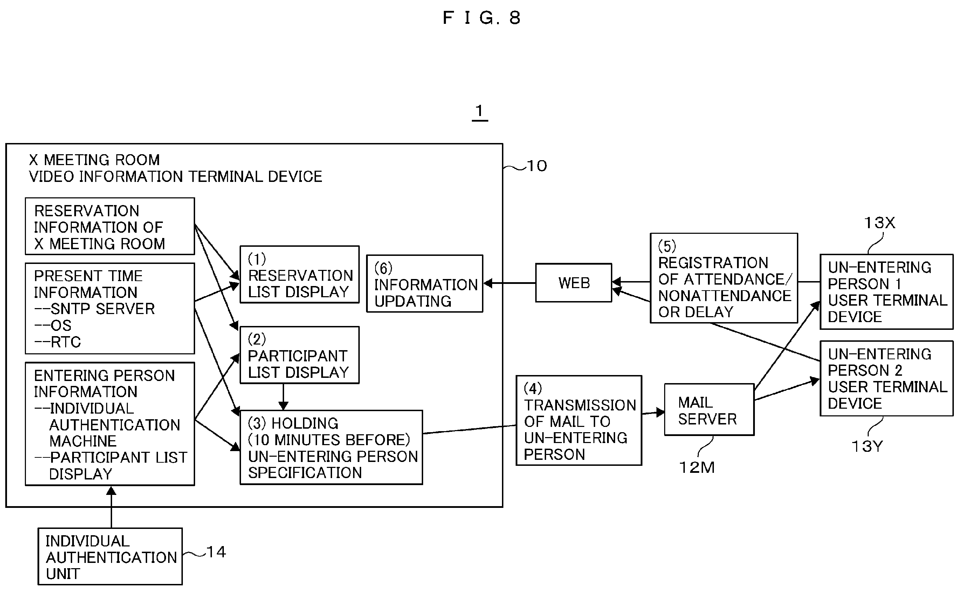

A system block diagram according to a method of selecting a specific meeting corresponding to the specifications and a method of managing persons who enter a meeting room will be described below. Figure 8 is a first block diagram of the video display system according to the second embodiment, and shows a flow in which, in particular, the video information terminal device 10 creates a reservation person list of meeting rooms to display the reservation person list on the video display unit 11, and, thereafter, creating a participant list to display the participant list on the video display unit 11, and updating the lists. The flow is performed in the order of numbers in parentheses.

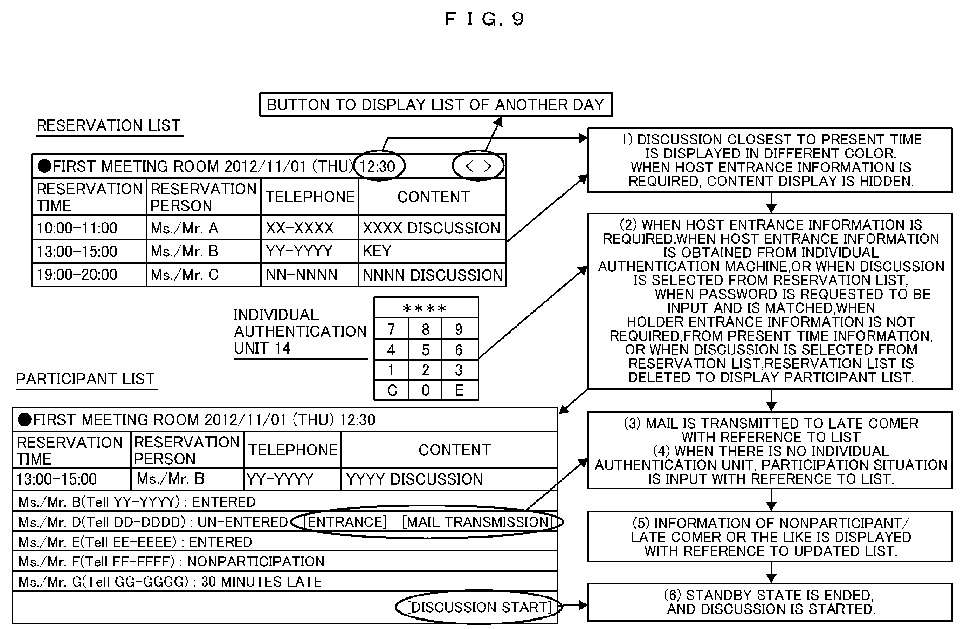

Figure 9 is a diagram showing a reservation list and a participant list of meetings in the second embodiment. Figure 9 also shows a flow.

In Figure 8, the video information terminal device 10 creates a reservation list of meeting rooms on the basis of the reservation information for meeting room and current time and displays the reservation list on the video display unit 11. At this time, as a method of acquiring the current time by the video information terminal device 10, a method of acquiring the current time from an external SNTP server, a method of acquiring the current time from the management time of the OS, and a method of acquiring the current time from RTC are given.

An example of the reservation list to be displayed is shown in the upper part in Figure 9. In the reservation list, meeting room names, current time of day, reservation times of meeting rooms, reservation persons (may be the same as hosts), telephone numbers of the reservation persons, and contents of the meetings are displayed. A member can select one of the meetings from the displayed reservation list by touching the display of a specific meeting with her/his finger. The reservation list may have a scroll key to display a reservation list on another day. A meeting having reservation time closest to the current time may be displayed with a character style or in a color different from that of another meeting. With respect to a meeting having a high security level, the contents of the meeting may not displayed until a host enters the meeting room.

In Figure 8, the video information terminal device 10 creates a participant list of a meeting and displays the participant list on the video display unit 11 in place of the reservation list. This flow will be described again with reference to Figure 9.

In the meeting having a high security level, when the individual authentication unit 14 knows entrance of a host by using fingerprint authentication, the video information terminal device 10 creates a participant list of the meeting and displays the participant list on the video display unit 11 in place of the reservation list. Alternatively, when a member selects a specific meeting from the displayed reservation person list, the video information terminal device 10 requests, for example, a password on the video image of the video display unit 11. When the response of the member is matched with the password, the video information terminal device 10 creates a participant list of the corresponding meeting and displays the participant list on the video display unit 11 in place of the reservation list.

In a meeting having a security level which is not high, when the current time comes close to the start time of the meeting or when a member selects a specific meeting from the displayed reservation person list, the video information terminal device 10 creates a participant list of the corresponding meeting and displays the participant list on the video display unit 11 in place of the reservation list.

An example of the participant list to be displayed is shown in the lower part in Figure 9. In the participant list, meeting room names, current time of day, reservation times of meeting rooms, reservation persons (may be the same as hosts), telephone numbers of the reservation persons, contents of the meetings, names of members, and current states of the members are shown. Each of the current states of the members expresses that the member has entered the meeting room, that the member notified the host of participation in the meeting but has not entered the meeting room, that the member notified the host of nonparticipation in the meeting, or that the member notified the host of being late for the meeting. A member except for the host can notify the video information terminal device 10 of room entrance by using the individual authentication unit 14 when the member enters the meeting room.

When, like Ms./Mr. D, a certain member notified of the host of participation in the meeting but has not entered the meeting room, software keys are displayed on a place in parentheses in the list. When a member who has entered the meeting room touches the key "mail transmission", a mail is transmitted to Ms./Mr. D to urge her/him to rapidly enter the meeting room. This can be utilized to back up a member who is late without notice.

The Ms./Mr. D touches a key "room entrance" when she/he enters the room to make it possible to notify the video information terminal device 10 of room entrance. This is effective to know the states of participants when the video display system 1 does not have the individual authentication unit 14.

When the state of a participant changes, the participant list is updated, and new states are displayed on the video display unit 11. Furthermore, when, for example, a host touches a key "discussion start" key, the video display system 1 ends its standby state to start the meeting written on the participant list.

Returning to Figure 8, the description will be continued. After the participant list is displayed on the video display unit 11, the video information terminal device 10 transmits a mail to a member who notified the host of participation in the meeting but has not entered the meeting room to urge her/him to rapidly enter the meeting room a predetermined time (for example, 10 minutes) before the meeting is started. For example, when the corresponding unentered persons are two persons as shown in the drawing, the mail server 12M which receives the mail transmits the mail to the user terminal devices 13X and 13Y held by the unentered persons. Each of the unentered persons who receives the mail operates the corresponding user terminal device 13 to access the video information terminal device 10 through a network by accessing the WEB by using a URL written on the received mail to register a new current state. The video information terminal device 10, on the basis of the report, updates information related to the states of the members in the participant list. For example, when it is reported that a member will be late for the meeting, the state information of the member is updated into information expressed as being late.

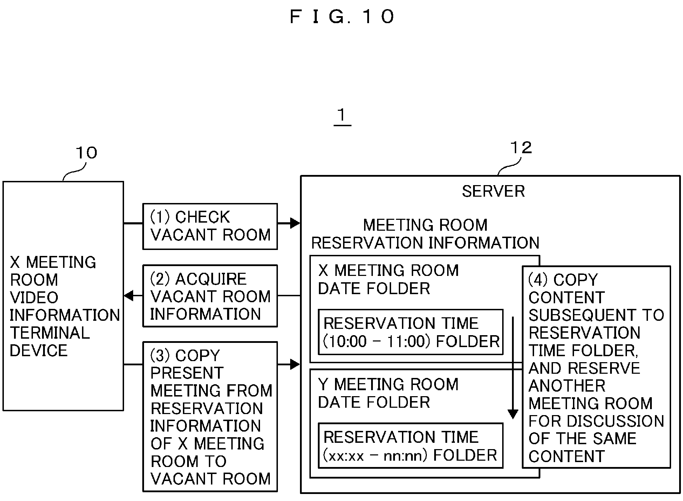

Figure 10 is a second block diagram of the video display system 1 according to the second embodiment. When meeting rooms must be changed on the day of a meeting in haste or when the time of the meeting exceeds a reservation time, the video information terminal device 10 inquires at the server 12 about a vacant meeting room and shows back up for reserving another meeting room. The flow is performed in the order of numbers in parentheses.

The video information terminal device 10 inquires at the server 12 about a vacant meeting room. When a meeting room which has been used up to now or is scheduled to be used is a meeting room X, when another meeting room Y can be used, the server 12 notifies the server 12 that the meeting room Y can be used. When a member understands the change into the meeting room Y, the video information terminal device 10 notifies the server 12 that the member understands the change into the meeting room Y. At this time, reservation information regarding the corresponding meeting in the meeting room X is moved to the reservation information in the meeting room Y. More specifically, in Figure 7, the folders subsequent to a reservation time folder regarding the meeting are moved from the position under the folding of the meeting room X to the position under the folding of the meeting room Y. At this time, the video information terminal device 10 transmits a mail describing the change of the meeting rooms to the user terminal device 13 of a member who answered that she/he participated in the meeting but has not entered the room.

In this manner, a cumbersome process with the change of the meeting rooms or notification to members need not be performed by the members including the host.

According to the video display system 1 or the video information terminal device 10 shown in Figure 8 to Figure 10, each of the members of the meeting including the host can select a specific meeting from a displayed image, persons who enter the meeting room can be managed, and coping with the change of the meeting rooms can be performed. For this reason, the smoothness of meeting can be advantageously enhanced.

### Third Embodiment

Specifications regarding a method of displaying digital minute captured by the video information terminal device 10 on the video display unit 11 will be described below, and a concrete display image will be described below.

As the specifications, first, in the video information terminal device 10, an information display space called a navigation bar hereinafter is arranged on, for example, an upper end portion of a video image displayed on the video display unit 11. In proceeding of a meeting, the video information terminal device 10, on the basis of the reservation list of the meeting room, the participant list, and the current time, displays, for example, an agenda (contents), participants, the current time, and a remaining time of the reservation on the navigation bar. For example, when the video image is captured by the video information terminal device 10 and used as a digital minute, the information displayed on the navigation bar functions to add a title to the minute.

Second, in proceeding of the meeting, the video information terminal device 10 uses a part or the whole (except for the display region of the navigation bar) of a video display region on the video display unit 11 is used as a display region for the captured digital minute.

Third, when a member attaches the minute file to the reservation information for meeting room, after the meeting is started, the video information terminal device 10 encodes the minute file to display the minute file as a digital minute in the display region. In this manner, the member can cause a new meeting to proceed on the basis of the minutes of the meetings executed in the past.

Fourth, in proceeding of the meeting, the video information terminal device 10 displays a menu used to cause a member who participates in the meeting to operate the display region of the digital minute on the navigation bar.

Fifth, when a remaining time of the reservation time is equal to or shorter than a predetermined time (for example, 10 minutes), the video information terminal device 10 generates, for example, alarm sound to the members who participate in the meeting and notifies the member that the remaining time is equal to or shorter than the predetermined time.

Sixth, at the end of the meeting, the video information terminal device 10 stops the power supply thereto. Alternatively, a menu used to cause a member to select whether the operation is performed is arranged on the video information terminal device 10. In this manner, consciousness of power saving by a member is improved.

Seventh, when the video information terminal device 10 has the interactive unit 106, the interactive unit 106 operates the display region of the digital minute to move, for example, a display place to perform an operation of changing a display area in the minute.

All the first to seventh specifications need not be always satisfied.

A method of causing the video display terminal 10 to display a digital minute on the video display unit 11 in the video information terminal device 10 in response to the above specification.

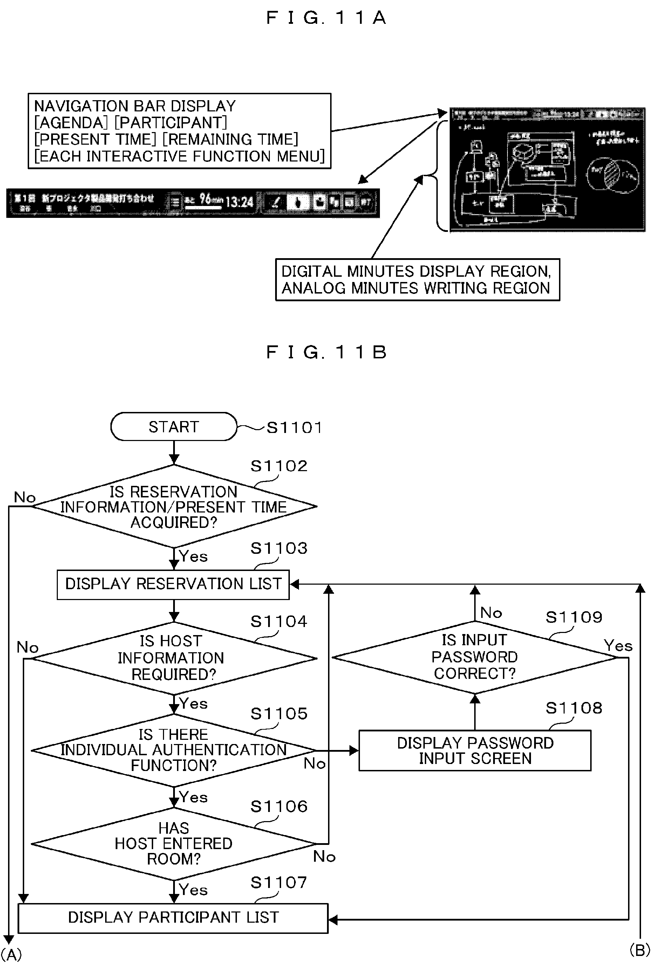

Figure 11A is a diagram showing an example of a video image displayed on the video display unit 11 according to the third embodiment. The video image is generated by the video information terminal device 10. A navigation bar is displayed on an upper-end part of the display image. In the navigation bar, an agenda of a meeting, participants, current time, a remaining time, and software keys to operate the display image by using an interactive function are displayed. A lower side of the navigation bar is a display region for the digital minutes, and is a region in which an analog minute is written. For example, a digital minute created by causing the video information terminal device 10 to capture a diagram or letters written by a member on the video display unit 11 with a marker pen in the previous meeting is displayed.

As will be described later, the display region for the digital minute is scrolled with the interactive function to secure an analog minute writing region, and a member writes diagrams or letters in a blank region by means of a marker pen. A display image on the video display unit 11 on which the diagrams or the letters are newly written is captured again, and the captured image is synthesized with a digital minute obtained by capturing the image together with the digital minute which is previously being displayed to create a new digital minute.

A case in which the video information terminal device 10 is a liquid crystal projector and the video display unit 11 is a whiteboard will be considered. In a black portion in the display image in Figure 11A, the video information terminal device 10 rarely irradiates light on the video display unit 11. For this reason, the corresponding portion is visually recognized as a portion in the color of the background of the whiteboard, i.e., white.

A white portion in the display image in Figure 11A, the video information terminal device 10 strongly irradiates light on the video display unit 11. The corresponding portion is a region in which an analog minute configured by letters and diagrams drawn in colors such as black, red, and blue on the whiteboard is written. However, the portion is a display region for a digital minute. After the analog minute is captured with the video information terminal device 10 to obtain a digital minute, and the region is converted into a white portion shown in Figure 11A. More specifically, the brightness is inverted. Since an optical reflectance of the whiteboard is high, the corresponding portion is displayed to make the whiteboard visually bright.

The present inventor found that a display which brightly shines the white background having a high optical reflectance was examined to advantageously obtain a digital minute visually vividly displayed, and applied this result to the embodiment.

When a new analog minute is added to the digital minute with a marker pen, the analog minute is visually recognized with a low brightness on the white background as a matter of course. For this reason, a participant can understand both the minutes as different minutes during a meeting, and can advantageously understand procedure contents of proceedings.

A flow of operations of causing the video information terminal device 10 to display a created digital minute on the video display unit 11 in response to the specifications will be described below.

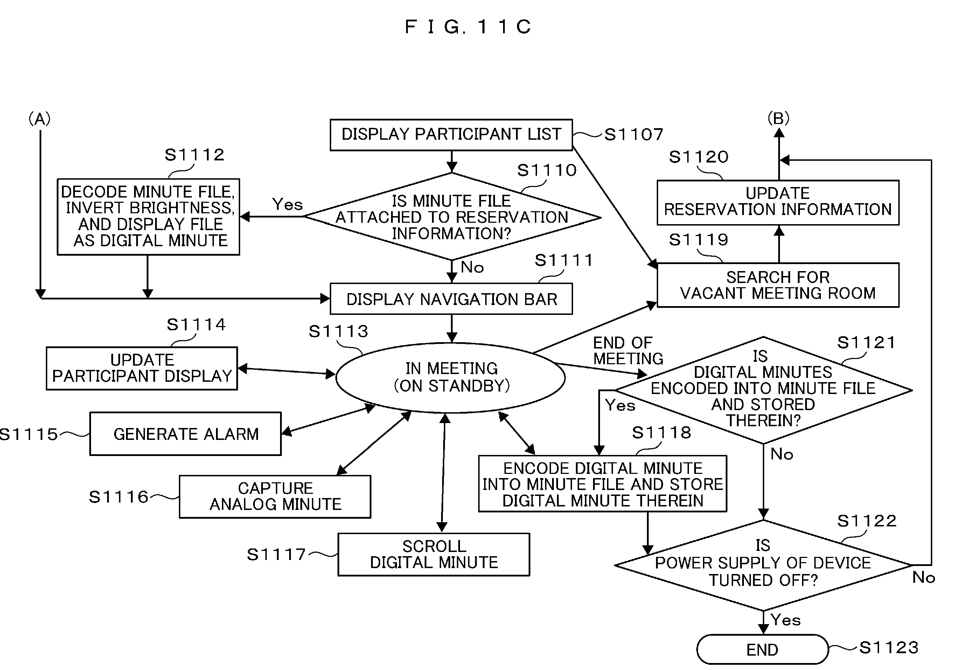

Figure 11B and Figure 11C are flow charts showing the flow of operations in the third embodiment. Both the drawings are integrated with each other to form one flow chart. A step number having S as an initial is added to each step of the flow. Both the diagrams are connected to each other at portions indicated by (A) and (B). Step S1107 is shared by both the drawings. Figure 11B is also a flow chart showing a flow of operations in the previous second embodiment.

Figure 11B will be described first.

In step S1101, the flow is started. In the subsequent flows, for example, an operation of updating reservation information for meeting room and an operation of updating entered person information when the terminal has the individual authentication 14 are executed in a predetermined time cycle even though the operations are not described as steps in the flow.

In step S1102, the video information terminal device 10 acquires the reservation information for meeting room from the server 12 and tries to acquire current time information from the timer unit 105 to determine an acquisition result.

As a result of the determination in step S1102, when the video information terminal device 10 cannot acquire, for example, the reservation information for meeting room, it may be understood that a meeting will be held without reservation for a meeting room. For this reason, the operation shifts from (A) in the drawing to step S1111 in Figure 11C, the video information terminal device 10 displays only the navigation bar on the video display unit 11 to urge a host to start a meeting using the video information terminal device 10. In this case, as a matter of course, participants or the like are not displayed on the navigation bar.

As a result of the determination in step S1102, when the video information terminal device 10 can acquire information typified by reservation information for meeting room, the operation shifts to step S1103.

In step S1103, the video information terminal device 10, on the basis of the reservation information for meeting room acquired in step S1102, creates a reservation list as shown in an upper part in Figure 9 and displays the reservation list on the video display unit 11. A participant in a meeting selects a meeting from the displayed reservation list.

The information displayed in the reservation list is updated even on a display screen as needed. After the reservation list is displayed, when a participant does not make the selection within a predetermined period of time, the reservation list may be displayed such that a meeting which will be held at time closest to the current time is conspicuous.

The video information terminal device 10 may have a function of displaying a reservation list on another day or a function of stopping a meeting and deleting an information display from the reservation list when the participant in the meeting operates a button display shown in the reservation list in Figure 9.

In step S1104, the video information terminal device 10, on the basis of the reservation information, determines whether the meeting is a meeting having a high security level at which detailed information should not be displayed until a host enters a meeting room. When the meeting has the high security level, as described in the reservation by Ms./Mr. B in Figure 9, for example, a column "content" is withheld.

As a result of the determination in step S1104, when the meeting does not have the high security level, the operation shifts to step S1107, and the video information terminal device 10 displays a participant list regarding the meeting selected from the reservation list by the participant on the video display unit 11. An example of the participant list is shown in a lower part in Figure 9.

As a result of the determined in step S1104, it is determined that the meeting has the high security level, the operation shifts to step S1105.

In step S1105, the video information terminal device 10 determines whether the video display system has the individual authentication unit 14.

As a result of the determination in step S1105, when it is determined that the video display system 1 does not have the individual authentication unit 14, the operation shifts to step S1108.

In the step S1108, the video information terminal device 10 displays a password input screen for determining host entrance information on the video display unit 11. The display example shows in a middle part in Figure 9.

In step S1109, it is determined whether a password input through the input screen is matched with a password of the host of the meeting.

As a result of the determination in step S1109, when the password is matched with the password of the host, it is understood that the security is kept in the presence of the host. For this reason, the operation returns to step S1107, and the video information terminal device 10 displays a participant list on the video display unit 11.

As a result of the determination in step S1109, when the password is not matched with the password of the host, since it can be understood that the host is absent on the meeting room, the operation returns to step S1103.

As a result of the previous determination in step S1105, when it is determined that the video display system 1 has the individual authentication unit 14, the operation shifts to step S1106.

In step S1106, the video information terminal device 10, on the basis of the entered person information obtained from the individual authentication unit 14,
determines whether the host of the meeting has entered the meeting room.

As a result of the determination in step S1106, when it is determined that the host has not entered the meeting room, the operation returns to step S1103.

As a result of the determination in step S1106, when it is determined that the host has entered the meeting room, the operation shifts to step S1107, and the video information terminal device 10 displays the participant list on the video display unit 11.

When, for example, a participant accesses the WEB by using a URL written on a holding notification mail to update information, the information displayed in the participant list is updated as needed depending on the updated information. When there is information representing that a participant notified the host of attendance and will be late for the meeting, the display is updated depending on the information. When the participant list is displayed, a participant manually updates, for example, attendance information to start or stop the meeting. Alternatively, when a designation to change meeting rooms is generated, the video information terminal device 10 receives the designation.

The video display system achieved by the flow including steps S1101 to S1109 operates to display a reservation list and a participant list in consideration of the security level of the meeting.

The steps subsequent to step S1107 will be described below with reference to Figure 11C.

In step S1107, the video information terminal device 10 waits for a designation generated from a participant and representing that a meeting is started while displaying the participant list on the video display unit 11. When the designation is received, the video information terminal device 10 shifts to step S1110.

In step S1110, the video information terminal device 10 determines whether a minute file regarding the previous meeting is attached to previous reservation information for meeting room.

As a result of the determination in step S1110, when it is determined that the minute file is not attached, the operation shifts to step S1111.

In S1111, the video information terminal device 10 displays the navigation bar regarding to the reservation information for meeting room on the video display unit 11. An example of the navigation bar is shown in the left half of Figure 11A described above.

As a result of the determination in step S1110, when it is determined the minute file is attached, the operation shifts to step S1112.

In step S1112, the video information terminal device 10 displays the attached minute file as a digital minute on the video display unit 11 in a state in which the minute file is decoded and inverted in brightness as described above. When the video display unit 11 is a whiteboard, the digital minute is displayed by using the background of the whiteboard as a background portion such that written diagrams and letters shine.

Furthermore, in step S1111, the display of the navigation bar is added to the display of the digital minute. The corresponding example is shown in the right half of Figure 11A described above.

In step S1113, a meeting is progressing. The video information terminal device 10 waits for a next command from a participant, and the video information terminal device 10 performs an operation which is performed depending on determination by the video information terminal device 10 as needed. The example will be described in steps S1114 to S1118.

In step S1114, the video information terminal device 10 updates participant names to be displayed on the navigation bar when the participant list is updated.

In step S1115, the video information terminal device 10 generates an alarm to call attention to the participants when the current time is closed to the end time written on the reservation information for meeting within a predetermined period of time.

In step S1116, the video information terminal device 10, in response to a designation from a participant, captures an analog minute, converts the analog minute into a digital minute, synthesizes the digital minute with the digital minute being displayed on the video display unit 11, and displays the synthesized digital minute on the video display unit 11.

In step S1117, the video information terminal device 10, in response to a designation from a participant through the interactive unit 106, scrolls the display of the digital minute on the video display unit 11. This operation will be described in more detail in a fourth embodiment.

In step S1118, the video information terminal device 10, on the basis of a current display on the video display unit 11, creates a minute file and stores the minute file in, for example, the storage unit 107.

In both steps S1107 and S1113, when a participant instructs the video information terminal device 10 to search for another meeting room, the operation shifts to step S1119.

In step S1119, the video information terminal device 10 inquires, for example, the server 12 to search for a vacant meeting room.

In step S1120, the video information terminal device 10 updates the reservation information for meeting room on the basis of information of meeting rooms obtained by searching in step S1119, creates a minute file on the basis of the current display on the video display unit 11, and registers the minute file in new reservation information for meeting room. Thereafter, the operation returns to step S1103 in Figure 11B through (B) in the drawing so as to make the participants to resume the meeting in a new meeting room.

In step S1113 described above, when a participant of the meeting generates a command to end the meeting to the video information terminal device 10, the operation shifts to step S1121.

In step S1121, the video information terminal device 10 inquires at the participant to determine whether the minute file is created on the basis of the current display on the video display unit 11 by performing a display on, for example, the video display unit 11.

As a result of the inquiry in step S1121, when the minute file is created, the operation shifts to step S1122 through step S1118 described above.

As a result of the inquiry in step 1121, when the minute file is not created, the operation directly shifts to step S1122.

In step S1122, the video information terminal device 10 inquires at the participant to determine whether the power supply of the video information terminal device 10 is turned off with the end of the meeting by performing a display on, for example, the video display unit 11.

As a result of the inquiry in step S1122, when the power supply is not turned off, the operation returns to step S1103 in Figure 11B through (B) in the drawing, and the video information terminal device 10 waits while being supplied with the power.

As a result of the inquiry in step S1122, when the power supply is turned off, the power supply is turned off to end the operation in step S1123.

As described above, according to the video display system 1 or the video information terminal device 10 shown in Figure 11A to Figure 11C, a participant in a meeting can efficiently perform the meeting by using the navigation bar and the digital minute while watching a visually conspicuous display. For this reason, the smoothness of meeting can be advantageously enhanced.

### Fourth Embodiment

Specifications regarding a method of capturing and displaying an analog minute configured by letters and diagrams written on the video display unit 11 by a participant in a meeting will be described below, and the system configuration will be described in more detail.

As the specifications, first, the video information terminal device 10 has a function of capturing an analog minute described on the video display unit 11 typified by a whiteboard by the participant by means of a marker pen or the like. As the capture method, for example, a capture device 11A (printer output, an output to an external storage medium, or the like) typified by a capture function included in the whiteboard is used. Alternatively, a capture method using a camera will be conceived.

Second, the video information terminal device 10 creates a digital minute obtained by capturing and digitizing the analog minute and displays the digital minute as a video image on the video display unit 11.

Third, the video information terminal device 10 determines a background portion of the captured digital minute, makes the background portion transparent, and synthesizes the previously captured digital minute with the newly captured digital minute. For example, when the whiteboard is used, a portion having a brightness higher than a predetermined threshold value is determined as the background portion and is made transparent.

Fourth, the video information terminal device 10, by using the interactive unit 106, scrolls the digital minute display region to form a new space in the display screen on the video display unit 11. In the new spaced, for example, the participant in the meeting performs new writing to create an analog minute, or captures the analog minute to add the captured minute as a digital minute.

Fifth, when, for example, a liquid crystal projector is used as the video information terminal device 10 to project a digital minute as a video image on the surface of the whiteboard serving as the video display unit 11 so as to project the digital minute on the same position as that of the original analog minute.

Sixth, when, for example, a liquid crystal projector is used as the video information terminal device 10 to project a digital minute as a video image on the surface of the whiteboard serving as the video display unit 11, when an analog minute including letters and diagrams is written by the participant on the whiteboard by means of, for example, a marker pen, the digital minute and the analog minute look as if the digital minute and the analog minute are visually synthesized with each other. A state in which the analog minute is additionally written is captured by the video information terminal device 10 again, so that the digital minute synthesized with the previously captured minute is generated.

Seventh, when, for example, a liquid crystal projector is used as the video information terminal device 10 to project a digital minute as a video image on the surface of the whiteboard serving as the video display unit 11, the captured digital minute is displayed to have a brightness inverted from the brightness in the state of the analog minute.

In this manner, the video information terminal device 10 provides a conspicuous display on a glare-reduced screen when a video image is projected on the white surface of the white board with the liquid crystal projector. The display on which the analog minute and the digital minute can be easily visually discriminated from each other is provided.

Eighth, the video information terminal device 10 encodes the digital minute obtained by capturing into a video file and stores the encoded video file in the external storage medium 15 or the server 12. At this time, the brightness is inverted again to return the appearance to the original appearance, and a general-purpose video file is obtained. This video file is the same as the minute file.

Ninth, the video information terminal device 10 reads the minute file stored in the external storage medium 15 or the server 12 to provide a minute used when the temporarily interrupted meeting is resumed.

Tenth, when a blackboard is used as the video display unit 11, the video information terminal device 10 does not invert the brightness of a video image to be displayed. When a portion having a brightness lower than a predetermined threshold value is determined as a background portion and made transparent. Even though the blackboard is used, the background of the digital minute is expressed in black. When the minute file is stored, the brightness is inverted to express the background in white.

All the first to tenth specifications described above need not be always satisfied.

A method in which the video information terminal device 10 captures an analog minute to display the analog minute on the video display unit 11 in response to the specifications will be described below.

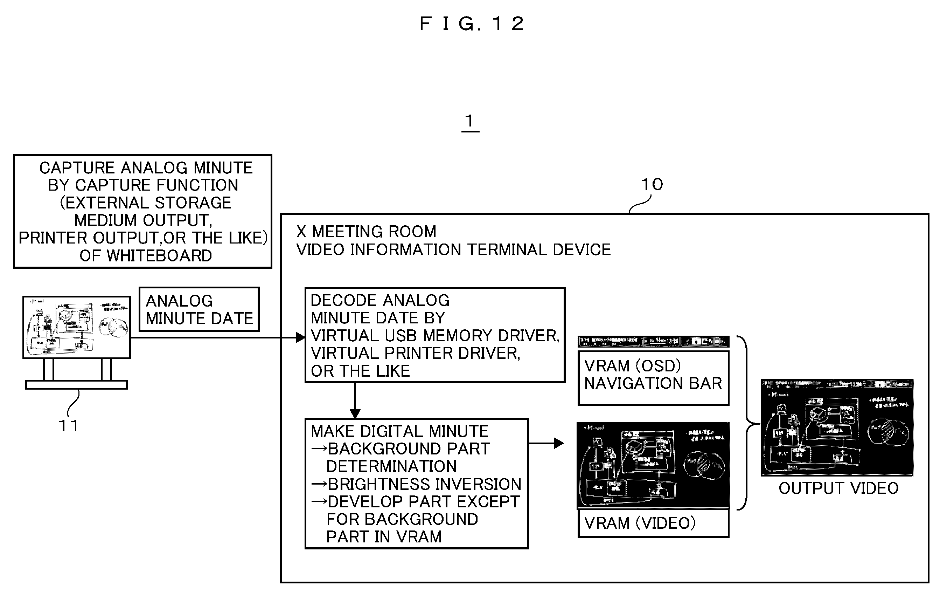

Figure 12 is a first block diagram of the video display system 1 in the fourth embodiment, and also shows a flow in which an analog minute including letters and diagrams written on the video display unit 11 typified by a whiteboard is captured, the video information terminal device 10 converts the analog minute into a digital minute, and the digital minute is displayed on the video display unit 11 again.

The video display unit 11 has the capture device 11A to capture an analog minute. The capture device 11A may be a sensor unit to generate information written on an external storage medium or a built-in printer by the video display unit 11.

Data of the analog minute supplied from the video display unit 11 to the video information terminal device 10 is decoded in a decoder included in the video information terminal device 10. As the decoder, a memory driver or a printer driver is used. In the decoded data, under the control of the CPU 101, a portion the background portion which is determined as described above and inverted in brightness and a portion except for the background portion, i.e., a portion written by the participant are stored in a VRAM included in the storage unit 107 as information. With the operation, the digital minute is stored in the VRAM.

The video information terminal device 10 displays the digital minute stored in the VRAM on the video display unit 11, information for generating the navigation bar is read from a VRAM for OSD included in the storage unit 107, and the information is displayed to be OSD-superposed on the digital minute.

At this time, since the brightness process is performed to the digital minute, the background portion is in a background color of the whiteboard, and the portion written by the participant reflects projection light at a high reflectance and is bright. For this reason, a visually clear display can be advantageously obtained.

In contrast to this, when the brightness process is not performed, the background portion occupying a large area on the display image reflects projection light at a high reflectance and shines, so as to obtain a display image which is considerably hard to be seen. In the embodiment, the problem is solved.

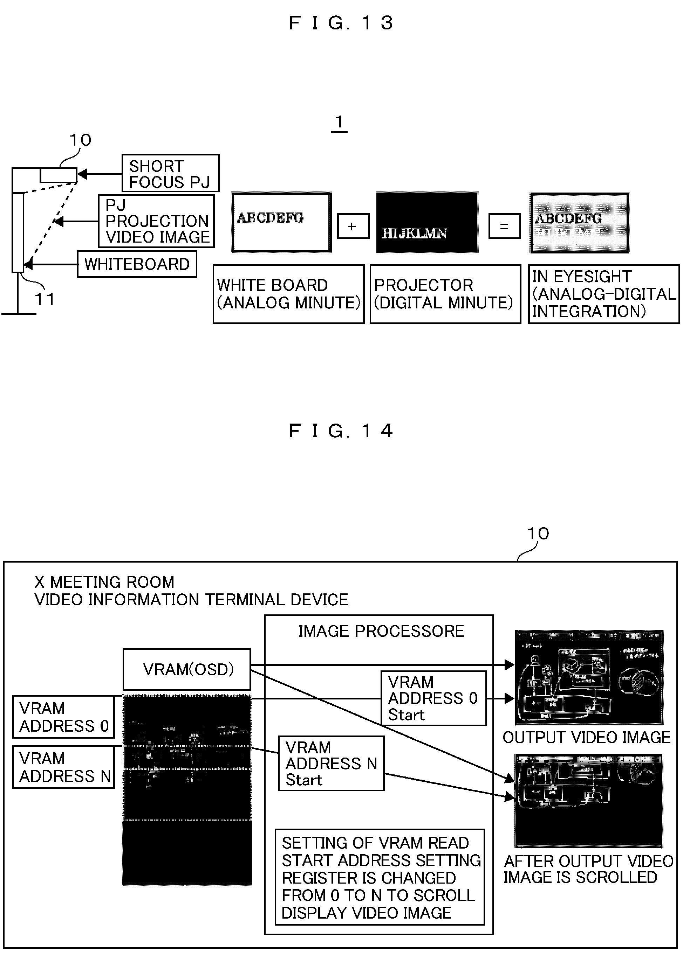

Figure 13 is a second block diagram of the video display system 1 according to the fourth embodiment, and a diagram showing a display image obtained when the video information terminal device 10 is a projector (abbreviated as a PJ in the drawing) typified by a liquid crystal projector and the video display unit 11 is a whiteboard.

In recent years, a projector using a projection lens having a short focal length is developed, and may be integrally attached to an upper part of a whiteboard. In this manner, the projector is prevented from being an obstacle for a participant in a meeting.

It is assumed that a digital minute (having pieces of character information of H to N in the drawing) included in the projector is displayed by the projector on the whiteboard and a participant writes an analog minute (having pieces of character information of A to G in the drawing) on the whiteboard. In this case, in view of the whiteboard, the analog minute is in the same color as that of a marker pen (for example, black) as a matter of course. Information included in the digital minute reflects projection light at a high reflectance and brightly shines. The background portion included in the digital minute has the background color (white) of the whiteboard and looks dark when the background portion and the digital minute are simultaneously watched. In this manner, the participant can clearly discriminate a previous minute or a minute obtained before the meeting is interrupted from this newly added minute.

Figure 14 is a third block diagram of the video display system 1 according to the fourth embodiment, and shows a situation in which the video information terminal device 10 scrolls a digital minute displayed on the video display unit 11 by using the interactive unit 106.

It is assumed that the VRAM included in the storage unit 107 requires, as a storage size to store one digital minute, a size corresponding to M addresses. In a way of using a normal VRAM, as a matter of course, M addresses to store one digital minute are prepared. In contrast to this, in the embodiment, (M + 1) or more addresses to store one digital minute are prepared. The newly prepared address is a margin for scrolling.

It is assumed that a participant in a meeting designates a specific part of the digital minute displayed on the video display unit 11 on the video display unit 11 and designates the video display unit 11 to display only the corresponding part. At the beginning, the digital minute is obtained by reading information at address 0 to address M in the VRAM. However, in response to the designation from the participant, for example, information located address N (N < M) to address (N + M) is read to obtain a digital minute. As a matter of course, N is determined depending on a designation of the participant.

In this manner, the displayed digital minute is scrolled up on the video display unit 11, and a space to additionally write an analog minute is prepared on a lower part of the video display unit 11. As a matter of course, a method of horizontally scrolling a display image and compressing the display image in the horizontal or vertical direction to prepare a space may be conceived. Both the methods are included in the scope of the embodiment.

As described above, the video information terminal device 10 according to the embodiment is characterized to not only directly display the digital minute but also process the digital minute to improve the usability for a participant and display the digital minute. At this time, as the characteristic feature, a displayed video image is not only simply coped and pasted but also copied and pasted such that read addresses in a storage portion prepared in advance in the VRAM are changed.

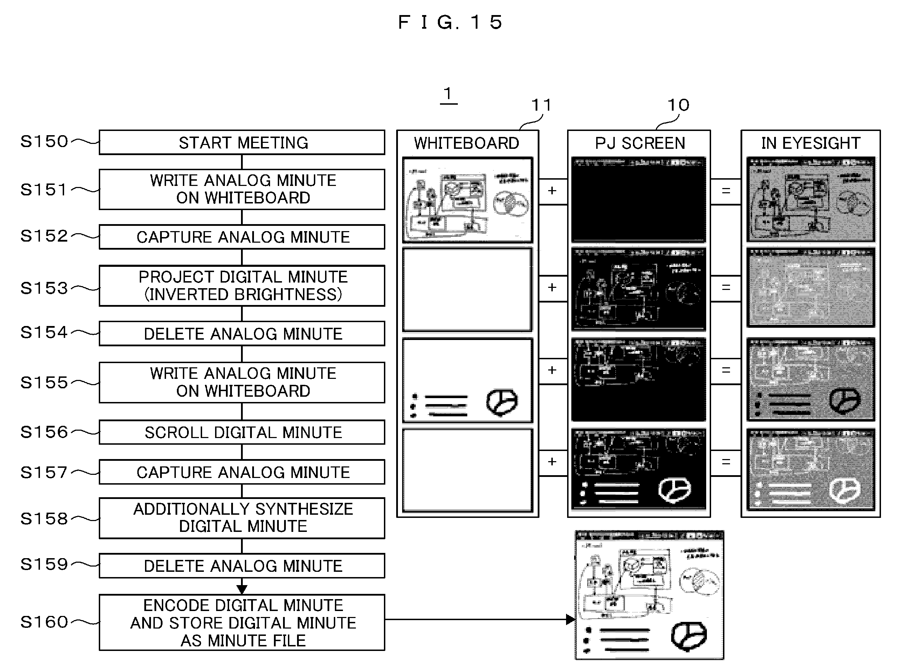

Figure 15 is a fourth block diagram of the video display system 1 according to the fourth embodiment, and shows a flow of operations in which a participant performs new writing on a digital minute displayed on the video display unit 11 by the video information terminal device 10 and a state in which the writing is performed is captured to generate a new digital minute together with an example of a displayed image.

A meeting is started in step S150.

In step S151, in accordance with proceedings of the meeting, the participant writes a first analog minute on the whiteboard serving as the video display unit 11. In this step, since a capture operation for the analog minute has not been performed yet, a digital minute is not stored in the projector serving as the video information terminal device 10. As a matter of course, on the video display unit 11, by using the color of the background portion as a background color, the analog minute is visually displayed in the color of a marker pen used when a user writes the analog minute.

In step S152, when the meeting completes its first stage, the video information terminal device 10 captures the analog minute which is temporarily completed through the video display unit 11, generates a digital minute, and stores the digital minute in the storage unit 107.

In step S153, the video information terminal device 10 reads the digital minute stored in the storage unit 107 and displays the digital minute on the video display unit 11.

In step S154, the video display unit 11 deletes the written analog minute. Since the processes are performed to the digital minute, after the analog minute is deleted, the video display unit 11, by using the color of the background portion as a background color, the digital minute is visually displayed such that the digital minute brightly shines. The order of steps S153 and S154 may be reversed.

In step S155, in accordance with proceedings of the meeting, a new analog minute is written on the video display unit 11 which displays the digital minute is displayed.

In step S156, a participant operates the interactive unit 106 of the video information terminal device 10, as described above in Figure 14, to scroll the display of the digital minute such that a portion in which the analog minute is written becomes a space. In this manner, on the video display unit 11, by using the color of the background portion as a background color, the newly written analog minute is visually displayed in the color of a marker pen with which the analog minute is written such that the scrolled digital minute brightly shines. For this reason, the participant can check the proceedings of the meeting in chronological order. The order of steps S155 and S156 may be reversed.

In step S157, when the meeting completes its next stage, the video information terminal device 10 captures a newly written analog minute through the video display unit 11.

In step S158, the video information terminal device 10 synthesizes data obtained by capturing the analog minute in step S157 with the previous digital minute stored in the storage unit 107 to generate a new digital minute.

The brightness inverting process is performed to the data obtained by capturing the data in step S157.

For this reason, after the newly written analog minute is deleted in step S159, on the video display unit 11, by using the color of the background portion as a background color, the digital minutes generated from both the analog minutes are displayed to brightly shine. The order of steps S158 and S159 may be reversed.

In step S160, the video information terminal device 10 encodes the generated digital minute and stores the encoded digital minute as a minute file in the storage unit 107 or the external storage medium 15. With respect to the minute file stored in the external storage medium 15, the brightness is inverted again to return the appearance to the original appearance, and the minute file is stored as a general-purpose video file.

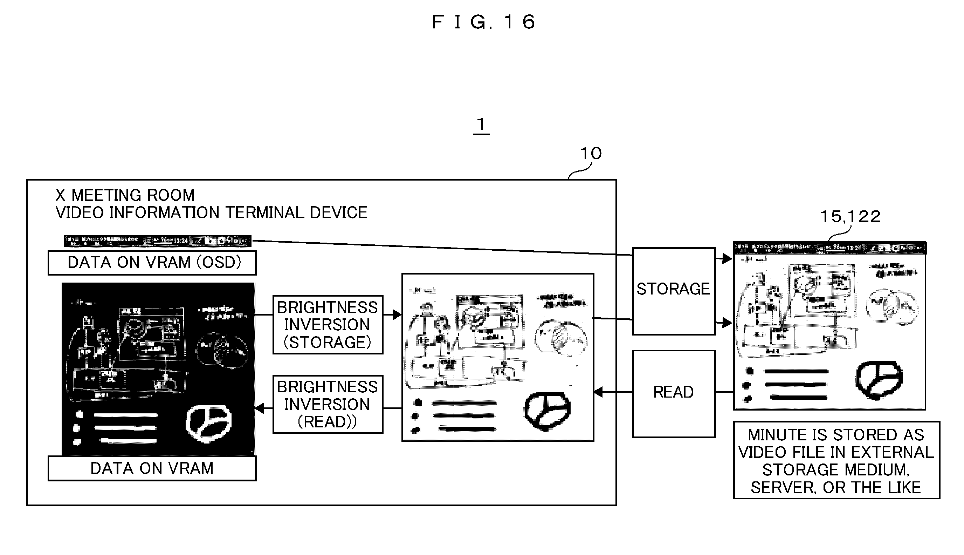

Figure 16 is a fifth block diagram of the video display system 1 according to the fourth embodiment, and also shows a relationship between the digital minute displayed on the video display unit 11 and the minute file stored in, for example, the external storage medium 15.

As described above, the digital minute and the minute file have a relationship to be inverted in brightness in data displayed on the video display unit 11 and data stored in the external storage medium 15 or the storage unit 122 of the server 12. On the other hand, the brightness of the data of the navigation bar OSD-superposed on the digital minute is not inverted. If the brightness of the navigation bar is displayed to be inverted, the display of the navigation is hardly seen by contrast, and the inverted display of the navigation bar is avoided in this embodiment.

As described above, according to the video display system 1 or the video information terminal device 10 shown in Figure 12 to Figure 16, the digital minute obtained by capturing the analog minute can be displayed to be easily visually understandable for a participant, and the smoothness of meeting can be advantageously enhanced.

### Fifth Embodiment

Specifications regarding a method of capturing an analog minute constituted by letters and diagrams written on the video display unit 11 by a participant in a meeting by means of a camera and displaying the analog minute will be described below, and the system configuration will be described in more detail.

As the specifications, first, the video information terminal device 10 uses a built-in or external camera to capture an analog minute written on the video display unit 11.

Second, even though the analog minute is captured with the camera, the video information terminal device 10 synthesizes a digital minute obtained by previously capturing an analog minute with a digital minute obtained by newly capturing an analog minute.

Third, the video information terminal device 10 has a menu for selecting a use area of a video image captured with the camera or a function of determining a use area.

Fourth, the video information terminal device 10, in the use area of the video image captured with the camera, uses the most frequently used color as a background color, and determines whether the video display unit 11 is any one of devices typified by a whiteboard or a blackboard. In response to a determination result, a threshold value to determine a background portion when the video image is captured may be set. This determining operation may be added to the menu, and the determining operation may be performed at a necessary timing.

All the first to fourth specifications described above need not be always satisfied.

A method in which the video information terminal device 10 captures an analog minute with a camera in accordance with the specifications to display the captured minute on the video display unit 11 will be described below.

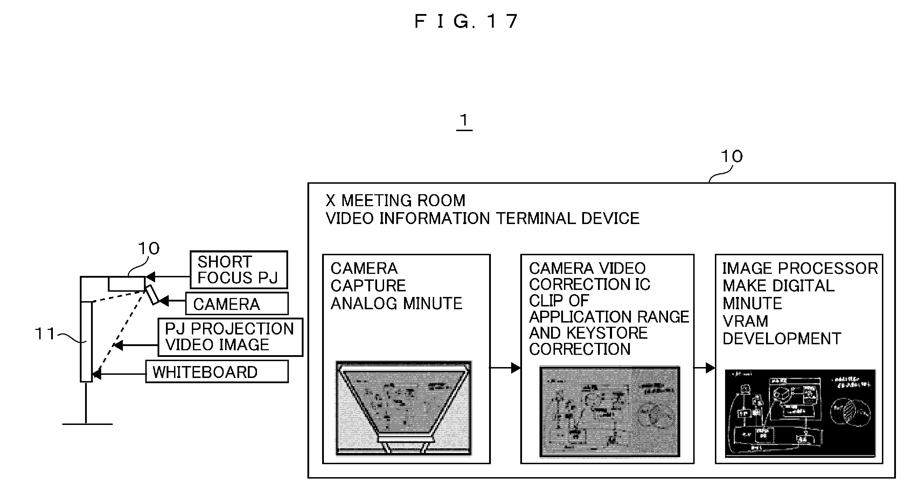

Figure 17 is a first block diagram of the video display system 1 according to the fifth embodiment and a diagram showing a display image obtained when the video information terminal device 10 is a projector (abbreviated as a PJ in the drawing) typified by a liquid crystal projector, the video display unit 11 is a whiteboard, and the video information terminal device 10 captures an analog minute with a camera.

The camera is attached near, for example, a projector such that the camera looks down the whiteboard. Thus, the analog minute to be captured with the camera is a trapezoidal image having the lower end side of the whiteboard as a short side. The projector has a correcting unit for a camera video image. The correcting unit corrects the camera video image such that an area in which the analog minute is captured is cut out of the captured image to convert the trapezoidal image into a rectangular image. Furthermore, the brightness inverting process is performed to the corrected image to generate a digital minute, and the digital minute is stored in the VRAM included in the storage unit 107 and displayed on the whiteboard.

Alternatively, when the video display unit 11 is a display unit which transmits light, a method of arranging the camera on the rear side of the video display unit 11 and capturing an image which is horizontally flipped may also be given. As a matter of course, when the digital minute is generated, the captured image is processed to be horizontally flipped.

In order to convert the captured trapezoidal image into the rectangular image, a resolution on the short-side side of the trapezoid disadvantageously decreases. However, since an image for a minute is not an image requiring a high resolution, the problem is relatively minor. Furthermore, a function of storing information missing in correction which converts a trapezoidal image into a rectangular image may be included in the system.

Problems occurring when an analog minute is captured with a camera include the following items.

As one the items, when an analog minute is captured when a digital minute is displayed on a projector, both the analog minute and the digital minute are captured. When the digital minute is synthesized with the digital minute which is subjected to the brightness inverting process and displayed in advance to generate a new digital minute, the minute which is displayed as the digital minute on the whiteboard is disadvantageously deleted or becomes unclear. Thus, in capturing, the digital minute is temporarily prevented from being displayed.

As another of the items, when the analog minute is captured with the camera, an image the brightness of which depends on the brightness in a room is captured, the background portion is difficult to be determined. Thus, in capturing, uniform illumination light having no video information is preferably irradiated from the projector on the whiteboard to prevent the captured image from depending on the brightness in the room.

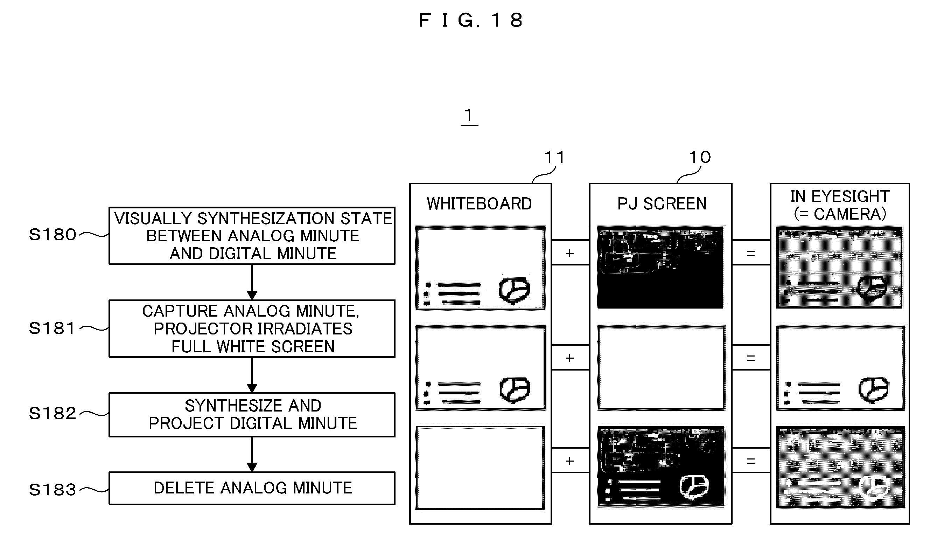

Figure 18 is a second block diagram of the video display system 1 according to the fifth embodiment, and also shows a flow including the step to solve the problems.

In step S180, an analog minute written on the white board by a participant and a digital minute included in the projector are displayed to be visually synthesized with each other on the white board.

In step S181, although the camera captures the analog minute, at this time, the projector irradiates uniform illumination light achieved by, for example, white light on the whiteboard without projecting the digital minute. In this manner, only the analog minute is visually displayed on the whiteboard with small dependence on the brightness in the room and then captured with the camera.

In step S182, the projector inverts the captured analog minute in brightness, synthesizes the analog minute with the previous digital minute to generate a new digital minute, and display the new digital minute on the whiteboard.

In step S183, in this step, the analog minute which is a visual obstacle is deleted. The order of steps S182 and S183 may be reversed.

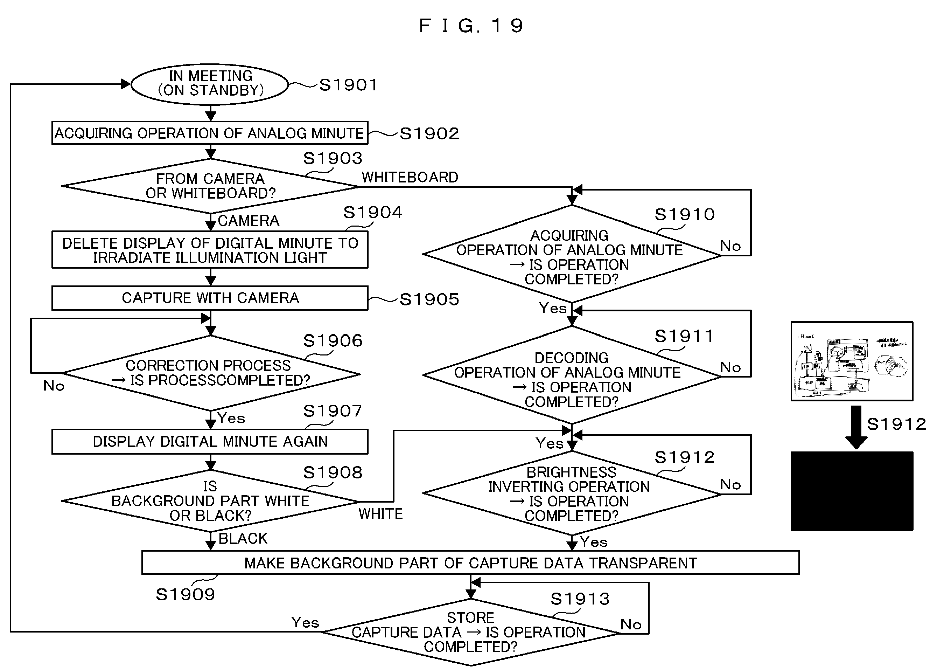

Figure 19 is a flow chart showing a flow of operations in the fifth embodiment. An entire operation flow performed when an analog minute is captured will be described below with reference to Figure 19.

In step S1901, a started meeting proceeds, and a participant performs writing on the video display unit 11 as needed. The video display system 1 waits for the next command.

In step S1902, one of participants including a host generates a command to capture and acquire the analog minute written on the video display unit 11. This command is generated such that the participant operates, for example, a press-button arranged on the video information terminal device 10 or the video display unit 11.

In step S1903, the CPU 101 of the video information terminal device 10 determines whether an analog minute is captured with the camera, for example, or captured with the capture device 11A of a printer included in the whiteboard serving as the video display unit 11. As a matter of course, when only one of the functions is arranged, the determination in step S1903 need not to be performed.

As a result of the determination in step S1903, when the analog minute is captured with the camera, the operation shifts to step S1904. When the analog minute is captured with the whiteboard, the operation shifts to step S1901.

In step S1904, in order to perform the capturing with the camera, when the digital minute is displayed on the video display unit 11, the video information terminal device 10 does not display the digital minute. Furthermore, uniform illumination light is irradiated on the video display unit 11 to make difficult to cause the brightness of the screen to depend on a surrounding state.

In step S1905, the camera capture an analog minute written on the video display unit 11.

In step S1906, the video information terminal device 10 cuts a use area out of the captured data, and performs a process of converting a trapezoidal video image into a rectangular video image. When the process is finished, the operation shifts to step S1907.

In step S1907, the video information terminal device 10 displays the digital minute which is prevented from being displayed in step S1904 described above on the video display unit 11 again.

In step S1908, the video information terminal device 10 determines whether the color of the background portion of the captured analog minute is black or white. This determined is performed such that a predetermined threshold value is set.

As a result of the determination in step S1908, when it is determined that the color of the background portion is white, the operation shifts to step S1912, the same process as that performed to the video image captured with the capture device 11A of a white board (will be described later) is performed.

As a result of the determination in step S1908, when it is determined that the color of the background portion is black, it can be considered that the video display unit 11 has a blackboard or a display unit having a dark color tone. For this reason, the operation directly shifts to step S1909.

As a result of the determination in step S1903, when the operation shifts to step S1910, as described in the steps subsequent to step S1910, for example, a process suitable for capturing an analog minute with the capture device 11A of the printer on, for example, a whiteboard is performed.

In step S1910, for example, the capture device 11A of the printer performs an operation of acquiring an analog minute, and shifts to step S1911 after the operation is finished.

In step S1911, the video information terminal device 10 performs an operation of decoding the analog minute acquired in step S1910, and shifts to step S1912 after the operation is finished.

In step S1912, the video information terminal device 10 inverts the brightness of the analog minute decoded in step S1911, performs an operation of adding a navigation bar, and shifts to step S1909 after the operation is finished.

In step S1909, the video information terminal device 10, even though it is determined in step S1908 that the color of the background portion is black, makes the black background portion transparent and shifts to step S1913.

In step S1913, the video information terminal device 10 stores the capture data subjected to the process to the background portion in step S1909 in the VRAM included in storage unit 107.

The video information terminal device 10 returns to step S1901 after the storing operation is finished and waits for the next command from a participant.

According to the video display system 1 or the video information terminal device 10 shown in Figure 17 to Figure 19, a digital minute obtained by capturing an analog minute with the camera can be displayed to be visually understandable for a participant, and the smoothness of meeting can be advantageously enhanced.

### Sixth Embodiment

Specifications regarding a method of adding literature used in a meeting by a participant in the meeting and attaching the literature to previous reservation information for meeting room will be described below, and the system configuration will be described in more detail.

As the method of adding a literature to reservation information for meeting room, as described in the first embodiment, a method of attaching the literature to the reservation information list of the meeting room by the user terminal device 13 typified by a PC as described in the first embodiment is also given. However, as the specifications of the sixth embodiment, the literature is transmitted to the video information terminal device 10 by using a mobile terminal typified by a tablet PC.

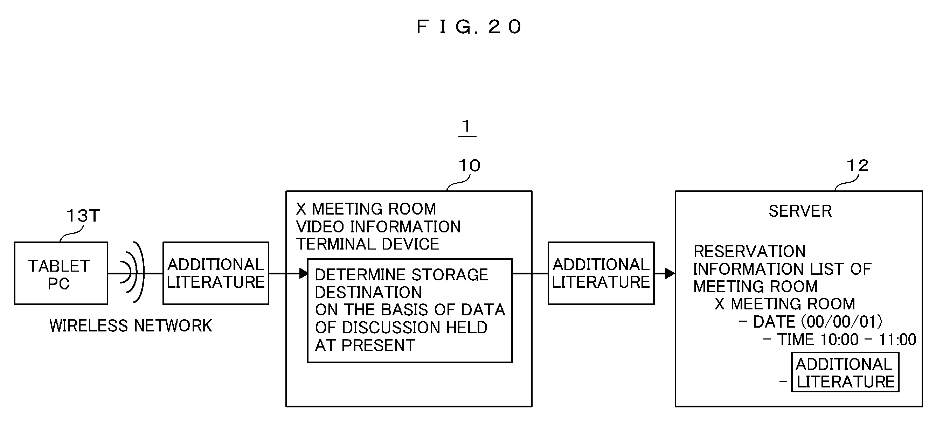

Figure 20 is a first block diagram of the video display system 1 according to the sixth embodiment, and shows a state in which a member of a meeting uses a mobile terminal 13T typified by a tablet PC to access a constituent element of the video display system 1 through a wireless network.

A certain member operates the mobile terminal 13T to transmit an electronic file of an additional literature used in the meeting to the video information terminal device 10. As a matter of course, the member may be attending the meeting.

The video information terminal device 10 checks, for example, a transmitter name with member names registered in a meeting which is being held at present to determine a storage destination suitable for the additional literature. The video information terminal device 10 transfers the electronic file of the additional literature to the server 12. The transferred server 12 which receives the transferred electronic file, on the basis the folder structure shown in Figure 7, stores the electronic file in a folder for an attached literature file under folders for suitable meeting rooms, dates, and reservation times.

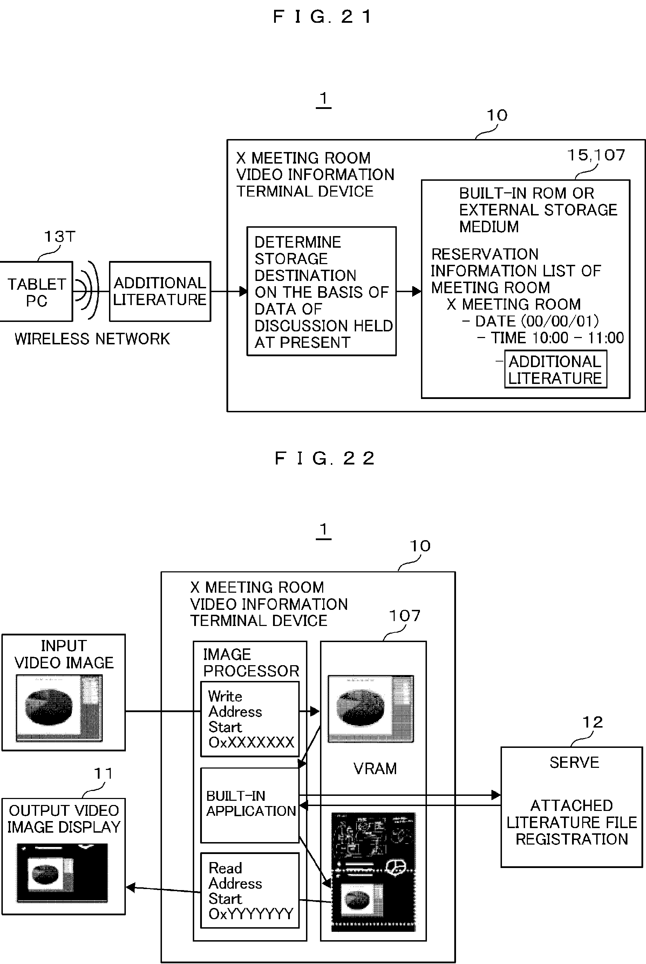

Figure 21 is a second block diagram of the video display system according to the sixth embodiment, and shows a case in which, unlike in Figure 20, the video information terminal device 10 stores an electronic file of an additional literature in the ROM included in the storage unit 107 or the external mechanical medium 15. The other configuration in Figure 21 is the same as that in Figure 20, and a detailed description thereof will be omitted.

According to the video display system 1 or the video information terminal device 10 shown in Figure 20 and Figure 21, a member of a meeting can provide the additional literature as needed by using a compact light-weight mobile terminal, and the smoothness of meeting can be advantageously enhanced.

### Seventh Embodiment

With respect to a method of capturing video data supplied from an external device to the video information terminal device 10 and using the captured video data as an attached literature for meeting, the system configuration will be described in more detail. The external device may be, for example, the user terminal device 13. However, the external device may be a device which is not described in the specification described above, for example, a video recording/reproducing device such as a DVD player or a BD recorder.

Figure 22 is a first block diagram of the video display system 1 according to a seventh embodiment. An image processor included in the CPU 101 of the video information terminal device 10 processes the video data supplied from the external device. At this time, the video data is stored in the VRAM included in the storage unit 107 by using a certain address as a write start address (in Figure 22, address 0xXXXXXXXX).

A built-in application in the image processor reads the video data stored in the VRAM and supplies the video data to the server 12, and the server 12 registers the video data in the storage unit 122 as an attached literature file as shown in Figure 7. At this time, the built-in application pastes the video data read from the VRAM on the file of the digital minute displayed on the video display unit 11 at present in the VRAM. For example, the video data may be pasted by the same method as the method shown in Figure 14.

Furthermore, the built-in application reads the digital minute on which the video data is pasted from the VRAM such that a start address (in Figure 22, address 0xYYYYYYYY) is set to display an image obtained by the video data on the video display unit 11, supplies the digital minute to the video display unit, and displays the digital minute on the video display unit 11. In this manner, the video image supplied from the external device can be displayed on the video display unit 11 together with the digital minute.

However, as a matter of course, the write start address (0xXXXXXXXX) and the read start address (0xYYYYYYYY) are different from each other. For this reason, in the method shown in Figure 22, accesses to the different addresses are simultaneously performed in the VRAM. In an actual VRAM, the method shown in Figure 22 may be difficult to be performed at present.

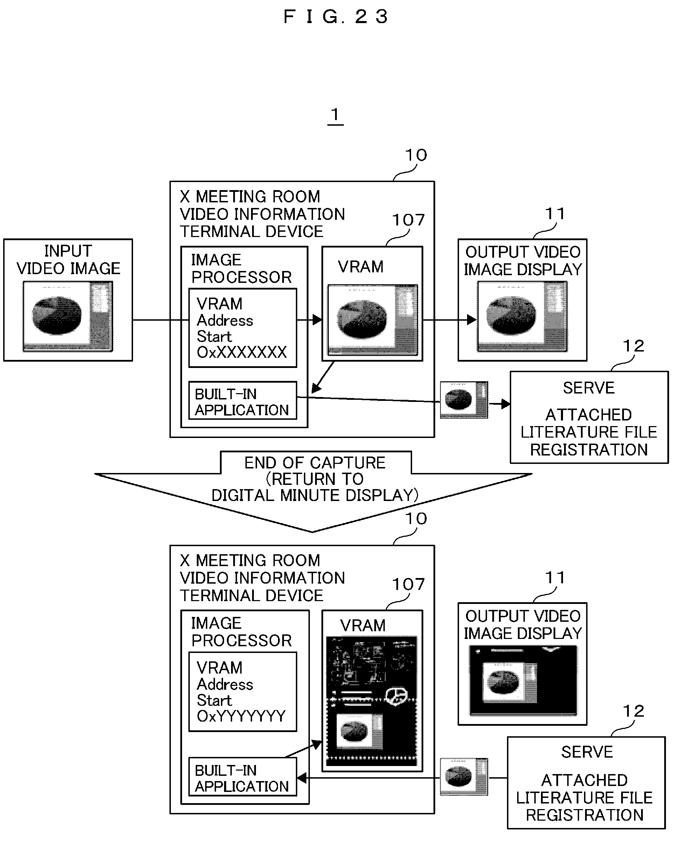

Figure 23 is a second block diagram of the video display system 1 according to the seventh seventh embodiment, and, unlike Figure 22, shows an easily executable method. In this case, upon completion of an operation of storing video data input from an external device in a VRAM, process steps are time-serially separated from each to display the video data pasted on a digital minute.

The image processor included in the CPU 101 of the video information terminal device 10 stores the video data in the VRAM included in the storage unit 107 by setting a certain address a write start address (in Figure 22, address 0xXXXXXXXX). A built-in application included in the image processor supplies the video data stored in the VRAM and supplies the video data to the server 12. The server 12 registers the video data in the storage unit 122 as an attached literature file as shown in Figure 7. As described above, the operation of capturing the video data is completed first.

The built-in application reads the video data from the VRAM and pastes the video data on the file of the digital minute displayed on the video display unit 11 at present in the VRAM.

Furthermore, the built-in application reads the digital minute on which the video data is pasted from the VRAM such that a start address (in Figure 22, address 0xYYYYYYYY) to display an image obtained by the video data on the video display unit 11, supplies and displays the digital minute on the video display unit 11. In this manner, a video image supplied from the external device can be displayed on the video display unit 11 together with the digital minute.

Thus, unlike in the method shown in Figure 22, in the method in Figure 23, writing and reading the video data on/from VRAM are not simultaneously performed for different addresses. The method can be easily executed even at present.

According to the video display system 1 or the video information terminal device 10 shown in Figure 22 and Figure 23, a member of a meeting can display video data supplied from an external device to the video display system 1 on the video display unit 11 together with a digital minute, and the smoothness of meeting can be advantageously enhanced. Eighth Embodiment

Specifications regarding a method of reading and decoding an attached literature registered in reservation information for meeting room and displaying the decoded literature for participants in a meeting will be described below, and the system configuration will be described in more detail.

As the specifications, first, the video information terminal device 10, for example, in the server 12, reproduces an attached literature in the reservation information for meeting room stored as shown in Figure 7, and displays the attached literature on the video display unit 11.

Second, the video information terminal device 10 refers to, in addition to the attached literature, a literature supplied from, for example, the connected external storage medium 15 and displays the literature on the video display unit 11.

Third, by the menu displayed on the navigation bar shown in Figure 11A, a participant in the meeting selects an attached literature to be displayed on the video display unit 11 by using the interactive unit 106.

Fourth, a video image obtained by reproduction is also pasted on any position in the display area of the digital minute, and displayed on the video display unit 11.

All the first to fourth specifications need not be always satisfied.

A method in which the video information terminal device 10 reads the attached literature registered in the reservation information for meeting room in response to the specifications and displays the attached literature on the video display unit 11 will be described below.

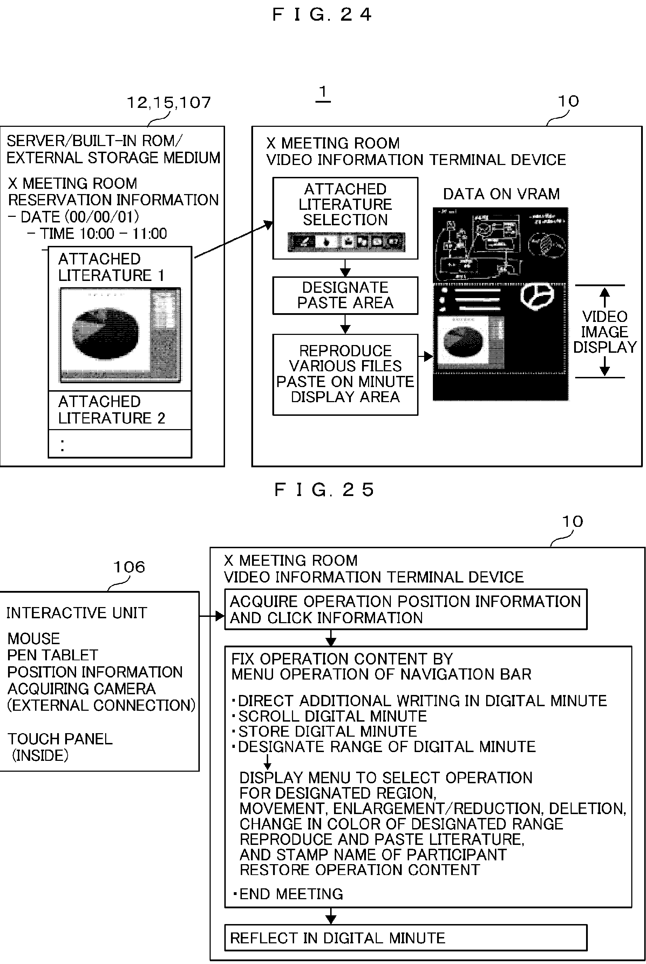

Figure 24 is a block diagram of the video display system 1 according to an eighth embodiment.

The attached literature may be stored any one of the server 12, a ROM included in the storage unit 107 included in the video information terminal device 10, and the external storage medium 15. When the attached literature is stored in the storage unit 122 of the server 12, the attached literature is stored under a date folder and a time folder related to the attached literature in the reservation information for meeting room as shown in the drawing. As a matter of course, only one attached literature is not always stored under one time folder.

A participant in a meeting uses an icon included in the navigation bar displayed on the video display unit 11 by the video information terminal device 10 to designate the server 12 through the video information terminal device 10 to read the attached literature from the server 12. By using another icon included on the navigation bar, a paste area for the attached literature in the displayed digital minute is designated.

In response to this, the video information display terminal 10 receives the file of the attached literature supplied from the server 12 and pastes the file in the designated area of the digital minute. The operation is performed on the VRAM included in the storage unit 107. In response to the designation of the paste area, a video display area on the VRAM is determined such that an entire attached file is displayed. In response to this, the digital minute displayed on the video display unit 11 is scrolled for example, and the entire attached file is displayed on the video display unit 11. As a matter of course, the digital minute may be partially displayed.

According to the video display system 1 and the video information terminal device 10 shown in Figure 24, a member of a meeting can refer to attached literatures of the meeting stored in various storage media while displaying the attached literatures on the video display unit 11, and the smoothness of meeting can be advantageously enhanced.

### Ninth Embodiment

Specifications regarding a method of editing the digital minute will be described below, and the system configuration will be described in more detail.

As the specifications, first, a user of the video information terminal device 10, according to the menu included in the navigation bar shown in Figure 11A, edits the digital minute by using the interactive unit 106.

Second, the video information terminal device 10 has a video editing function corresponding to a basic paint program. For example, video editing functions such as functions of adding writing, moving a selected area on an image, enlarging or reducing the selected area, deleting the selected area, and changing the selected area in color are given.

Third, the video information terminal device 10 stamps participant names in the reservation information for meeting room.

All the first to third specifications described above need not be always satisfied.

Figure 25 is a block diagram of the video information terminal device 10 according to a ninth embodiment. The video information terminal device 10 has the interactive unit 106. The interactive unit 106 may be a device typified by a mouse, a pen tablet, or a camera externally connected to the video information terminal device 10, or may be a touch panel built in the video information terminal device 10. In any case, the interactive unit 106 may be any constituent element to acquire positional information in a displayed image.

A participant in a meeting uses the interactive unit 106 to designate a point or a certain area on the image displayed on the video display unit 11 by the video information terminal device 10 with, for example, a click. Positional information and click information based on the designation is acquired by the video information terminal device 10. By the menu displayed on the navigation bar shown in Figure 11A, the participant in the meeting selects and fixes contents to be operated.

The participant in the meeting additionally writes new information on the digital minute displayed on, for example, the video display unit 11 and scrolls the display. Furthermore, the participant edits the digital minute and stores a newly generated digital minute in the storage unit 107. By using the interactive unit 106, one point or a certain area is designated on the display minute displayed on the video display unit 11.

The video information terminal device 10, with respect to the designated area in the displayed digital minute, displays a menu for selecting something to do by the participant in the meeting on the video display unit 11. The participant in the meeting moves an image in, for example, the designated area to another position, enlarges or reduces the image, deletes the image, changes the image in color, reproduces a new literature and pastes the literature in the area, or pastes participant names of the meeting so as to edit the digital minute. As a matter of course, the participant in the meeting can restore the edited contents.

At the end of the meeting, in a state in which the edited contents are reflected in the digital minute, the digital minute is encoded into a minute file, and the minute file is stored in the server 12 or the storage unit 107.

According to the video information terminal device 10 shown in Figure 25, a member of the meeting can edit the digital minute and can advantageously enhance the smoothness of meeting.

### Tenth Embodiment

A Post-it function to group attached literature files in the video information terminal device 10 will be described below.

As specifications, first, the video information terminal device 10 groups the attached literature files described in the first embodiment, the sixth embodiment, and the eighth embodiment by using a digital Post-it function.

Second, the digital Post-it function classifies the files by color depending on the groups and displays the files on the video display unit 11.

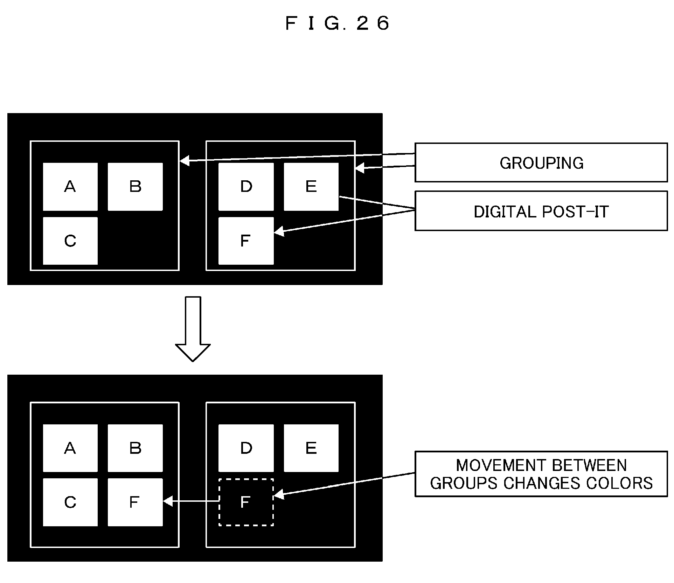

Figure 26 shows an example of a video image displayed on the video display unit 11 by the video information terminal device 10. Reference symbols A to F in the drawing denote attached literature files different from each other. The attached literature files are classified in two groups depending on literature contents. At the beginning, the files A to C are classified in a first group by the Post-it function, and the files D to F are classified in a second group by the Post-it function. It is assumed that the attached literature files in the first group are displayed in yellow on the video display unit 11 and the attached literature file in the second group is displayed in green on the video display unit 11.

It is assumed that the file F of the attached literature files is moved from the second group to the first group by using the Post-it function. At this time, the color of the attached literature file F is changed from green into yellow and displayed on the video display unit 11.

The video information terminal device 10 using the Post-it function shown in Figure 26 can display icons of a plurality of attached literature files such that the icons can be understandably classified, and can advantageously enhance the smoothness of meeting.

### Eleventh Embodiment

A schedule display function in the video information terminal device 10 will be described below.

As specifications, first, the video information terminal device 10 displays a daily sheet (calendar) in a display region of the digital minute.

Second, a user selects a scale of the calendar to scroll the calendar.

Third, the video information terminal device 10 captures contents additionally written by the user on the calendar displayed on a whiteboard or the like in the same manner as that of capturing the analog minute, and digitizes the contents.

Fourth, the video information terminal device 10 writes, in addition to the data of the minute file, the captured schedule data in a storage medium or reads the schedule data from the storage medium.

All the first to fourth specifications described above need not be always satisfied.

The first to eleventh embodiments which have been described up to now are only examples, and do not limit the present invention. Although other embodiments can be conceived on the basis of the spirit and scope of the present invention, all the embodiments are included in the scope of the present invention.

### Reference Signs List

- 1: video display system,
- 10: video information terminal device,
- 11: video display unit,
- 12: server,
- 13: user terminal device,
- 14: individual authentication unit,
- 15: external storage medium

## Claims

1. A video information terminal device for meeting room which processes video information to display the video information on an external video display unit, comprising:
a storage unit which stores the video information therein;
a video output unit which reads the video information stored in the storage unit to display the video information on the video display unit;
a communication unit which communicates an external user terminal device held by a user of the video information terminal device; and
a control unit which controls the operation of the video information terminal device, wherein
the control unit on the basis of information obtained through the communication unit from the user and regarding reservation for a meeting room, controls an operation of the video information terminal device such that a reservation list including information regarding a reservation time, a reservation person, and contents of the meeting room is created, stored in the storage unit, and displayed on the video display unit through the video output unit.

2. The video information terminal device according to claim 1, wherein
the information regarding the reservation for the meeting room and obtained from the user includes information of members of a meeting, and
the control unit controls the operation of the video information terminal device such that, on the basis of the information of the members, an electronic mail for inquiring each of the members whether she/he attends the meeting is transmitted to the user terminal device through the communication unit.

3. The video information terminal device according to claim 2, wherein
the control unit controls an operation of the video information terminal device such that, when the user selects a display regarding one meeting from the reservation list displayed on the video display unit, a participant list including the information of the members regarding the selected meeting is created, stored in the storage unit, and displayed on the video display unit through the video output unit.

4. The video information terminal device according to claim 3, wherein
the participant list includes information regarding whether each of the members regarding the meeting attends the meeting, and
the control unit controls the operation of the video information terminal device such that, on the basis of an answer obtained from each of the members through the communication unit to an electronic mail for inquiring whether the member attends the meeting, the participant list is updated.

5. The video information terminal device according to claim 4, wherein
the video information terminal device has a timer unit for supplying information of current time to the control unit, and
the control unit controls the operation of the video information terminal device such that, when start time of a meeting regarding the reservation time included in the reservation list comes to time after a predetermined time after the current time supplied from the timer unit, an electronic mail urging the member who answered that she/he attended the meeting but has not entered the meeting room to attend the meeting is transmitted to the member through the communication unit.

6. The video information terminal device according to claim 5, wherein
the control unit controls the operation of the video information terminal device to call attention to attendances of the meeting when ending time of the meeting regarding the reservation time included in the reservation list comes to time before a predetermined time after the current time supplied from the timer unit.

7. A video display system including the video information terminal device according to claim 6 and a server connected through the communication unit, wherein
the server is connected to the plurality of video information terminal devices installed in a plurality of meeting rooms, respectively, to transmit/receive information regarding reservation for the meeting rooms, and
the control unit controls the operation of the video information terminal device such that, when ending time of the meeting regarding the reservation time included in the reservation list comes to time before a predetermined time after the current time supplied from the timer unit, an unused meeting room is reserved by inquiring at the server, the reservation list is created on the basis of the newly reserved meeting room and stored in the storage unit.

8. The video information terminal device according to claim 3, wherein
the control unit controls the operation of the video information terminal device such that, when the information received from the user and regarding to reservation for a meeting room represents that a meeting held in the meeting room is a meeting having a high security level, when the user selects a display regarding one meeting from the reservation list displayed on the video display unit, the user is requested to input a password unique to a host of the meeting, or authentication whether the user is the host of the meeting is performed, and when the password input by the user in response to this is matched with the password unique to the host of the meeting, or when the user is authenticated as the host of the meeting, a participant list including information of members regarding the selected meeting is created, stored in the storage unit, and displayed on the video display unit through the video output unit.

9. The video information terminal device according to claim 3, wherein
the control unit controls the operation of the video information terminal device such that, on the basis of the participant list, a navigation bar, to be displayed in a predetermined area on the video display unit, including information regarding participants in the meeting is created, stored in the storage unit, and displayed on the video display unit through the video output unit.

10. A video information terminal device for meeting room which processes video information to display the video information on an external video display unit, comprising:
a storage unit which stores video information therein;
a video output unit which reads the video information stored in the storage unit to display the video information on the video display unit;
and a capture unit which captures letters or diagrams hand-written on the video display unit by a user of the video information terminal device and converts the captured letters or the diagrams into digital data, wherein
the control unit controls the operation of the video information terminal device such that video data obtained by the capturing and the conversion into the digital data is inverted in brightness and stored in the storage unit, and the stored video data is read and displayed on the video display unit through the video output unit.

11. The video information terminal device according to claim 10, wherein
the video information terminal device has an interactive unit to perform designation to display an area designated by the user in a video image displayed on the video processing unit, and
the control unit controls the operation of the video information terminal device such that, on the basis of the designation from the interactive unit, storage addresses to read the video data from the storage unit are changed without address intervals between a read start address to a read end address, and the video data is read and displayed on the video display unit through the video output unit.

12. The video information terminal device according to claim 10, wherein
the control unit controls the operation of the video information terminal device such that video data obtained by causing the capture unit to capture a video image newly written by the user on a video image displayed on the video display unit and to convert the captured video image into digital data is inverted in brightness and synthesized with video data stored in the storage unit, new video data obtained by the synthesization is stored in the storage unit and displayed on the video display unit through the output unit.

13. A video information terminal device for meeting room which processes video information to display the video information on an external video display unit, comprising:
a storage unit which stores the video information therein;
a video output unit which reads the video information stored in the storage unit to display the video information on the video display unit;
a capture unit which captures, in addition to a video image written by a user of the video information terminal device on the video display unit, video information captured and supplied by an external capture device and converts the video information into digital data; and
a control unit which controls the operation of the video information terminal device, wherein
the control unit controls the operation of the video information terminal device such that a video image on the video display unit is cut out of the digital data obtained by the conversion by the capture unit and converted into a rectangular video image, the video data obtained by the conversion is inverted in brightness and stored in the storage unit, and the stored video data is read and displayed on the video display unit through the video output unit.

14. The video information terminal device according to claim 13, wherein
the control unit controls the operation of the video information terminal device such that, when the external capture device captures a video image, the video information terminal device irradiates illumination light having no video information on the video display unit.

15. The video information terminal device according to claim 13, wherein
the control unit controls the operation of the video information terminal device such that the stored video data is read, synthesized with video data of a video image displayed on the video display unit by the video information terminal device when the user writes a video image, and displayed on the video display unit through the video output unit.

16. A video display system comprising:
the video information terminal device according to claim 1; a video display unit which displays a video image supplied by the video information terminal device; a user terminal device which exchanges information with the video information terminal device through the communication unit of the video information terminal device; and a storage unit typified by a server which exchanges information with the video information terminal device through the communication unit of the video information terminal device and stores the information obtained by the communication.
